(19) Europäisches Patentamt / European Patent Office / Office européen des brevets

(11) **EP 3 098 579 B1**

## (12) FASCICULE DE BREVET EUROPEEN

(45) Date de publication et mention
de la délivrance du brevet:
**03.07.2019 Bulletin 2019/27**

(51) Int Cl.:
***G01G 19/07*** *(2006.01)*

(21) Numéro de dépôt: **16168032.7**

(22) Date de dépôt: **03.05.2016**

(54) **PROCEDE D'ESTIMATION DE LA MASSE INSTANTANEE D'UN AERONEF A VOILURE TOURNANTE**

VERFAHREN ZUR SCHÄTZUNG DER MOMENTANEN MASSE EINES DREHFLÜGELFLUGGERÄTES

A METHOD OF ESTIMATING THE INSTANTANEOUS MASS OF A ROTARY WING AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.05.2015 FR 1501117**

(43) Date de publication de la demande:
**30.11.2016 Bulletin 2016/48**

(73) Titulaire: **Airbus Helicopters**
**13725 Marignane Cedex (FR)**

(72) Inventeur: **GERMANETTI, Serge**
**13005 MARSEILLE (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 2 461 142     EP-A2- 0 502 811**
**EP-A2- 2 966 635     GB-A- 2 137 153**
**US-A- 5 987 397**

## Description

La présente invention est du domaine de l'aide au pilotage des aéronefs à voilures tournantes.

La présente invention concerne un procédé et un dispositif d'estimation de la masse instantanée d'un aéronef à voilure tournante.

Un aéronef à voilure tournante comporte traditionnellement une installation motrice munie d'au moins un moteur, généralement un turbomoteur, et d'une boîte de transmission principale de puissance, l'installation motrice entraînant en rotation, par l'intermédiaire de la boîte de transmission principale de puissance au moins un rotor principal pour la sustentation voire la propulsion de l'aéronef et éventuellement un rotor anticouple. Un rotor anticouple est par exemple formé par un rotor arrière de l'aéronef ou bien par deux hélices propulsives situées de part et d'autre d'un fuselage de l'aéronef.

Le fonctionnement de l'aéronef s'effectue généralement sous la surveillance de différents paramètres caractéristiques par l'intermédiaire de plusieurs instruments situés sur une planche de bord de l'aéronef. Ces paramètres caractéristiques sont représentatifs du fonctionnement courant de l'aéronef et notamment de son installation motrice et/ou de chaque turbomoteur.

Ces paramètres caractéristiques peuvent être par exemple la vitesse de rotation $Ng$ du générateur de gaz de chaque turbomoteur, la température $T4$ d'éjection des gaz à l'entrée de la turbine libre de chaque turbomoteur et le couple moteur $C_m$ de chaque turbomoteur.

Pour des raisons physiques, il existe des limitations sur ces paramètres caractéristiques qui doivent être prises en compte à chaque instant du fonctionnement de l'aéronef. Ces différentes limitations peuvent dépendre des conditions extérieures ainsi que du mode de fonctionnement de l'aéronef.

Le pilote d'un aéronef doit surveiller, au cours du fonctionnement de cet aéronef et en permanence, les valeurs courantes de ces paramètres caractéristiques et les comparer avec leurs limitations respectives.

Ces limitations sont généralement différentes selon la phase de vol de l'aéronef et/ou les conditions extérieures telles que l'altitude et la température par exemple. En effet, selon chaque phase de vol et/ou les conditions extérieures ainsi que selon le mode de fonctionnement de l'installation motrice, la puissance maximale que peut fournir l'installation motrice est différente et sa durée de disponibilité peut également être limitée.

Par ailleurs, la masse instantanée de l'aéronef est un paramètre important dans la détermination de certaines limitations et/ou de certaines valeurs courantes de ces paramètres caractéristiques telles que la puissance que doit fournir chaque moteur de l'installation motrice pour la réalisation du vol ou bien d'une manoeuvre particulière. Notamment, l'installation motrice doit fournir une puissance mécanique suffisante afin que la portance du rotor principal s'oppose au moins à la masse instantanée de l'aéronef et assure ainsi la sustentation de l'aéronef.

Plusieurs méthodes d'estimation de la masse de l'aéronef existent aujourd'hui.

Une estimation de la masse de l'aéronef est généralement déterminée avant le décollage et le vol de l'aéronef, en additionnant par exemple la masse de l'aéronef à vide, la masse du carburant embarqué, la masse de l'équipage et de la charge utile transportée. Cette estimation de la masse de l'aéronef avant le décollage est ensuite utilisée au cours du vol de l'aéronef. Cette estimation de la masse de l'aéronef ne prend alors pas en compte la consommation de carburant de l'aéronef. Cette estimation de la masse de l'aéronef est ainsi constante et identique tout au long du vol de l'aéronef et la différence vis-à-vis de la masse instantanée réelle de l'aéronef augmente tout au long du vol. En conséquence, cette estimation de la masse de l'aéronef est surévaluée et entraine alors des performances non optimisées de l'aéronef.

Une estimation de la masse de l'aéronef peut également être déterminée au cours du vol de l'aéronef, généralement en déduisant la quantité de carburant consommé de l'estimation de la masse de l'aéronef avant le décollage.

Cependant, cette estimation de la masse de l'aéronef n'est généralement pas très précise et entraine une connaissance des performances non optimisées de l'aéronef. Une marge de sécurité est en effet généralement utilisée pour la détermination de cette estimation de la masse de l'aéronef et entraine alors une estimation de la masse de l'aéronef surévaluée. Cette marge de sécurité permet par exemple de prendre en compte des approximations dans la détermination de la masse de l'aéronef.

Cette estimation de la masse surévaluée va dans le sens de la sécurité, la puissance mécanique réellement nécessaire au vol de l'aéronef étant inférieure à la puissance nécessaire déterminée en fonction de cette estimation de la masse de l'aéronef. Par contre pour certaines manoeuvres nécessitant une importante puissance mécanique, cette puissance nécessaire déterminée qui est surévaluée peut être supérieure à la puissance maximum disponible au niveau de l'installation motrice, alors que la puissance mécanique réellement nécessaire est inférieure à cette puissance maximum disponible pour chaque moteur. Par suite, de telles manoeuvres ne sont pas réalisées par le pilote qui estime à tort que l'installation motrice ne peut pas fournir une puissance totale suffisante. Cette estimation de la masse peut ainsi entraîner une réduction plus ou moins Importante du domaine de vol de l'aéronef.

Cependant, cette estimation de la masse de l'aéronef peut également être sous-évaluée, en particulier suite à une mauvaise identification de la masse embarquée hors carburant, constituée par exemple par les passagers de l'aéronef et leurs bagages. Cette estimation sous-évaluée de la masse de l'aéronef fait alors peser un risque sur la sécurité des vols de l'aéronef, au contraire d'une estimation surévaluée, des accidents s'étant produits suite à ce type d'erreurs.

La masse d'un aéronef peut également être déterminée en utilisant des mesures effectuées sur l'environnement et/ou sur des composants de l'aéronef.

On connaît par exemple le document EP 2461142 qui décrit un dispositif de détermination de la masse au décollage d'un aéronef utilisant notamment des paramètres atmosphériques relatifs à l'environnement de l'aéronef, des paramètres de vols de l'aéronef et relatifs à ses moteurs ainsi que des courbes de performances de ses moteurs. Ce procédé est adapté aux vols stabilisés et horizontaux de l'aéronef, à savoir un vol d'avancement en palier à vitesse constante et un vol stationnaire.

De même, le document EP 0502811 décrit un dispositif de détermination de la masse d'un aéronef utilisant la distance entre son fuselage et les pales de son rotor principal ainsi que la vitesse de rotation de ces pales. Le document EP2966635A2 décrit un système et procédé pour alerter un utilisateur d'une situation dangereuse.

On connaît également le document US 5987397 qui décrit un dispositif estimant la masse et le centre de gravité d'un aéronef en fonction de mesures de paramètres de vol et en utilisant un système de réseau de neurones. Ce réseau de neurones applique une relation entre la masse de l'aéronef et ces paramètres de vol selon un algorithme non linéaire, cette relation ayant été préalablement établie suite à des vols d'essais.

Par ailleurs, le document GB 2137153 décrit un dispositif de détermination de la masse d'un aéronef lorsque son train d'atterrissage est en contact avec le sol et en fonction de la poussée ascensionnelle développée par le rotor principal de l'aéronef.

La présente invention a alors pour objet de proposer un procédé et un dispositif permettant de s'affranchir des limitations mentionnées ci-dessus, en permettant notamment de déterminer une estimation précise et fiable de la masse instantanée d'un aéronef à voilure tournante en cours de vol.

Selon l'invention, un procédé d'estimation de la masse instantanée d'un aéronef à voilure tournante comporte plusieurs étapes réalisées au cours d'un vol :

- on mesure des caractéristiques de vol de l'aéronef, telles qu'une vitesse horizontale $Vh$ et une vitesse verticale $Vz$ de l'aéronef par rapport à l'air ainsi qu'une hauteur $Hz$ de l'aéronef par rapport au sol,
- on mesure des caractéristiques de puissance de l'aéronef, telles que le couple $C_R$ et la vitesse réelle de rotation $NR$ du rotor principal ainsi que le couple $C_{RAC}$ et la vitesse réelle de rotation $NR_{AC}$ du rotor anticouple,
- on mesure des caractéristiques atmosphériques relatives à l'environnement de l'aéronef, telles que la pression atmosphérique $P_0$ et la température $T_0$ de l'air autour de l'aéronef,

- on détermine la puissance de vol $W$ de l'aéronef,
- on détermine un point de fonctionnement de l'aéronef sur au moins une série de courbes de performances de l'aéronef en fonction des caractéristiques de vol de l'aéronef, des caractéristiques atmosphériques et de la puissance de vol $W$ de l'aéronef, et
- on en déduit la masse instantanée mesurée $M_m$ de l'aéronef.

Un aéronef à voilure tournante comporte une pluralité de capteurs fournissant des mesures de différentes informations relatives à l'environnement de l'aéronef et/ou à l'état et au fonctionnement de l'aéronef et de ses équipements et/ou à la position et aux déplacements de l'aéronef par rapport à son environnement.

Par exemple, un premier type de capteurs permet de mesurer des premières informations relatives au vol de l'aéronef telles que la vitesse de l'aéronef par rapport à l'air. La vitesse de l'aéronef par rapport à l'air est par exemple mesurée de façon décomposée selon une vitesse horizontale $Vh$ et une vitesse verticale $Vz$, les directions horizontale et verticale étant définies dans un repère terrestre.

Par ailleurs et dans un souci de simplification de la description, on utilisera le terme « vitesse » pour désigner une vitesse de l'aéronef par rapport à l'air. En effet, le vol de l'aéronef est caractérisé par des effets aérodynamiques liés à cette vitesse de l'aéronef par rapport à l'air qui tient compte de l'effet du vent, ce vent suivant qu'il soit de face ou arrière vis-à-vis de l'aéronef augmentant ou réduisant la portance de l'aéronef et donc inversement réduisant ou augmentant son besoin en puissance.

Un deuxième type de capteurs permet de mesurer des deuxièmes informations relatives à la position de l'aéronef. Un capteur de ce deuxième type est par exemple un radioaltimètre déterminant la hauteur $Hz$ de l'aéronef par rapport au sol.

Ces premières et deuxièmes informations de vitesses de l'aéronef et de hauteur $Hz$ sont des caractéristiques de vol de l'aéronef.

Un troisième type de capteurs permet de mesurer des troisièmes informations relatives à l'environnement de l'aéronef telles que la pression atmosphérique et la température extérieure à l'aéronef. Ces troisièmes informations constituent des caractéristiques atmosphériques relatives à l'environnement de l'aéronef, qui influencent le comportement aérodynamique du rotor principal ainsi que le fonctionnement de chaque moteur de l'aéronef.

Enfin, un quatrième type de capteurs permet de mesurer des quatrièmes informations relatives aux performances de l'aéronef, qui concernent en particulier le rotor principal, le rotor anticouple et l'installation motrice de l'aéronef. Ces quatrièmes informations sont par exemple le couple $C_R$ et la vitesse réelle de rotation $NR$ du rotor principal ou bien le couple $C_{RAC}$ et la vitesse réelle de rotation $NR_{AC}$ du rotor anticouple. Ces quatrièmes informations peuvent également être le couple et la vitesse de rotation d'un arbre principal de sortie de l'installation motrice ou bien de chaque moteur. Ces quatrièmes informations constituent des mesures qui vont permettre de reconstituer les caractéristiques de puissance de l'aéronef.

Ces caractéristiques de puissance permettent notamment de déterminer les puissances consommées respectivement par le rotor principal et le rotor anticouple ou bien la puissance fournie par l'installation motrice ou bien encore par chaque moteur. On peut ensuite en déduire la puissance $W$ utilisée pour le vol de l'aéronef proprement dit, que l'on désignera plus simplement dans la suite de la description par l'expression « puissance de vol ».

Cette puissance de vol $W$ de l'aéronef peut être déterminée selon différents calculs.

Tout d'abord, cette puissance de vol $W$ est répartie entre le rotor principal et le rotor anticouple afin d'assurer la sustentation et les déplacements de l'aéronef. Cette puissance de vol $W$ est donc égale à la somme des puissances consommées par le rotor principal et par le rotor anticouple.

La puissance instantanée consommée par le rotor principal peut être définie de façon connue selon la formule $W_{RP} = C_R.NR$.

La puissance instantanée consommée par le rotor anticouple peut être déterminée selon une formule analogue $W_{RAC} = C_{RAC}.NR_{AC}$.

Cette puissance instantanée consommée par le rotor anticouple est utilisée essentiellement pour s'opposer à un couple dû à la réaction du rotor principal de l'aéronef au couple moteur utilisé pour mettre en rotation ce rotor principal et peut alors être estimée de façon connue. Par exemple, cette puissance instantanée consommée par le rotor anticouple peut être déterminée selon la vitesse d'avancement de l'aéronef. Lorsque cette vitesse d'avancement est nulle, le rotor anticouple s'oppose seul à ce couple, alors que lorsque cette vitesse d'avancement est non nulle, un effort aérodynamique transversal, proportionnel au carré de cette vitesse d'avancement, est généralement généré par un empennage sensiblement vertical situé à proximité du rotor arrière, permettant de réduire cette puissance instantanée consommée par le rotor anticouple.

Par ailleurs, la puissance totale fournie par l'installation motrice de l'aéronef est répartie d'une part en une puissance de vol $W$ pour le vol proprement dit de l'aéronef et d'autre part en une puissance accessoire $W_{acc}$ pour alimenter différents équipements de l'aéronef. Par suite, la puissance de vol $W$ est égale à la puissance motrice fournie par l'installation motrice à laquelle est soustraite cette puissance accessoire $W_{acc}$.

Cette puissance accessoire est utilisée par exemple pour alimenter les équipements électriques de l'aéronef tels que l'avionique, des équipements hydrauliques et électriques ou encore la climatisation de la cabine. Cette puissance accessoire $W_{acc}$ est ainsi composée principalement d'une puissance électrique et d'une puissance hydraulique et peut être déterminée de façon connue.

La puissance totale fournie par l'installation motrice peut être déterminée quant à elle par l'intermédiaire du couple $C_{im}$ et de la vitesse de rotation $N_{im}$ d'un arbre principal de sortie de l'installation motrice, telle que $W_{im} = C_{im}.NR_{im}$.

Cette puissance totale fournie par l'installation motrice peut également être déterminée par la somme des puissances fournies par ses moteurs. De plus, lorsque chaque moteur de l'installation motrice est un turbomoteur comportant un générateur de gaz et une turbine libre, la puissance fournie par chaque turbomoteur est fonction du couple en sortie de ce turbomoteur, d'une température interne $T4$ des gaz à l'entrée de la turbine libre de ce turbomoteur et de la vitesse de rotation $Ng$ du générateur de gaz de ce turbomoteur. La puissance instantanée $Wm_{inst}$ fournie par chaque moteur peut alors estimée telle que $Wm_{inst} = C_m.Ng$, $C_m$ étant le couple moteur relatif au générateur de gaz.

On peut ensuite, en fonction des caractéristiques de vol de l'aéronef, des caractéristiques atmosphériques et de la puissance de vol $W$, déterminer un point de fonctionnement de l'aéronef à l'aide d'une ou plusieurs courbes de performances de l'aéronef.

Les courbes de performances d'un aéronef sont fournies avec le manuel de vol de l'aéronef. Elles sont spécifiques à chaque aéronef et corrélées avec les courbes de puissance des moteurs de ce véhicule, en prenant en compte l'implantation de chaque moteur dans l'aéronef.

Les courbes de performances permettent de caractériser chaque aéronef et en particulier la puissance de vol $W$ que l'aéronef doit fournir ou bien peut fournir en fonction aussi bien de critères atmosphériques, tels que la pression atmosphérique $P_0$ et la température $T_0$ de l'air autour de l'aéronef, que de paramètres de l'aéronef, tels que sa masse ou sa vitesse.

Plusieurs courbes de performances existent pour chaque aéronef selon les différentes phases de vol de l'aéronef, et principalement pour les vols stationnaires, les vols en palier et les vols ascensionnels.

Afin de définir quelles séries de courbes de performances doivent être utilisées par le procédé selon l'invention, on peut utiliser un algorithme de sélection. Cet algorithme de sélection utilise par exemple les valeurs de la vitesse horizontale $Vh$ et la vitesse verticale $Vz$ de l'aéronef afin de déterminer si l'aéronef est par exemple en vol stationnaire, en vol ascensionnel ou bien en vol en palier.

En effet, lors d'un vol stationnaire, la vitesse horizontale $Vh$ et la vitesse verticale $Vz$ de l'aéronef sont sensiblement nulles.

Pour un vol ascensionnel, la vitesse verticale $Vz$ et la vitesse horizontale $Vh$ de l'aéronef sont non nulles. On entend en effet par « vol ascensionnel » un vol montant ou bien descendant de l'aéronef avec une vitesse d'avancement non nulle. Le vol vertical pur, c'est-à-dire avec une vitesse d'avancement nulle, est quant à lui un vol particulier répondant à des critères spécifiques.

Lors d'un vol en palier, la vitesse verticale $Vz$ de l'aéronef est sensiblement nulle et sa vitesse horizontale $Vh$ est non nulle.

Avantageusement, ces trois phases de vol, à savoir le vol stationnaire, le vol ascensionnel et le vol en palier, couvrent environ 90% des cas de vol d'un aéronef. Les autres cas de vol sont généralement des phases particulières et transitoires telles que les vols verticaux purs, les phases de vol avec une accélération importante et les virages avec un taux de virage important, par exemple supérieur à 10°/s (dix degrés par seconde).

Enfin, on déduit, à partir de ces courbes de performances de l'aéronef, des caractéristiques de vol, des caractéristiques atmosphériques et de la puissance de vol $W$, la masse instantanée mesurée $M_m$ de l'aéronef de façon précise et fiable.

De la sorte, la masse instantanée mesurée $M_m$ peut être déterminée de façon précise et fiable principalement pendant ces trois phases de vol particulières de l'aéronef. Avantageusement, la masse instantanée mesurée $M_m$ peut être déterminée de façon précise et fiable pendant la majorité du temps de vol de l'aéronef. En effet, cette masse instantanée mesurée $M_m$ ne peut pas être déterminée de façon précise et fiable pendant les autres phases de vol qui sont transitoires et donc de courtes durées. Ainsi, l'absence de cette masse instantanée mesurée $M_m$ précise et fiable est de courte durée et ne perturbe pas le déroulement du vol de l'aéronef.

Avantageusement, la connaissance de la masse instantanée mesurée $M_m$ permet alors d'optimiser l'utilisation de l'aéronef en utilisant cette masse instantanée mesurée $M_m$ en lieu et place d'une estimation de la masse de l'aéronef.

Par exemple, cette masse instantanée mesurée $M_m$ de l'aéronef permet de déterminer plus précisément la puissance de vol nécessaire pour la réalisation d'une manoeuvre particulière de l'aéronef, tel un vol en descente lente en vue d'un atterrissage, ou bien la réalisation d'un vol en palier avec une consommation de carburant optimisée, c'est-à-dire avec une durée maximale de vol ou bien une distance franchissable maximale.

De plus, à partir d'une puissance totale maximum disponible au niveau de l'installation motrice et de cette masse instantanée mesurée $M_m$, on peut déterminer avec précision une masse maximale transportable par l'aéronef. En effet, il est possible en utilisant les courbes de performances de l'aéronef et en connaissant la puissance maximum disponible au niveau de l'installation motrice de déterminer la masse totale maximum de l'aéronef possible en vol. On peut ensuite en déduire la masse maximale transportable qui est la différence entre cette masse totale maximum et la masse instantanée mesurée $M_m$ de l'aéronef.

Enfin, la masse instantanée mesurée $M_m$ de l'aéronef ainsi que cette masse maximale transportable peuvent être affichées sur un instrument ou bien un écran présent sur le tableau de bord de l'aéronef afin que le pilote de l'aéronef en prenne connaissance.

Dans le cas où l'aéronef est en vol stationnaire, les caractéristiques fonctionnelles de l'aéronef sont notamment définies par une série de premières courbes de performances selon une première formule

$$\frac{W}{\sigma} \cdot \left(\frac{NR_0}{NR}\right)^3 = k \cdot f_1 \left[\frac{M_m}{\sigma} \cdot \left(\frac{NR_0}{NR}\right)^2\right].$$

Dans ces conditions, $W$ est la puissance de vol de l'aéronef, $\sigma$ est un coefficient de réduction, $k$ est un coefficient d'influence du sol, $M_m$ est la masse instantanée mesurée de l'aéronef, $NR_0$ est une vitesse de consigne de rotation du rotor principal, $NR$ est la vitesse réelle de rotation du rotor principal et $f_1$ est une première fonction représentée par une série de premières courbes de performances de l'aéronef ayant pour ordonnée une première valeur

$$A_1 = \frac{W}{\sigma} \cdot \left(\frac{NR_0}{NR}\right)^3$$

et pour abscisse une seconde valeur

$$A_2 = \frac{M}{\sigma} \cdot \left(\frac{NR_0}{NR}\right)^2.$$

La valeur de ce coefficient d'influence $k$ du sol est définie par une courbe en fonction de la hauteur $Hz$ de l'aéronef par rapport au sol. Ce coefficient d'influence $k$ du sol permet de quantifier l'effet de la proximité du sol sur le comportement de l'aéronef et sur la puissance de vol de l'aéronef en fonction de la hauteur $Hz$ de l'aéronef par rapport au sol.

En effet, à proximité du sol, le souffle du rotor principal est renvoyé par le sol sur le fuselage et les pales principales de ce rotor principal modifiant le comportement de l'aéronef. On dit alors que l'aéronef est dans l'effet de sol, défini par les acronymes DES ou bien IGE pour l'expression en langue anglaise « In Ground Effect ». Cette zone DES couvre une hauteur allant du sol à environ quatre fois le diamètre du rotor principal de l'aéronef.

Au-dessus de cette zone DES, c'est-à-dire pour une hauteur par rapport au sol supérieure à environ quatre fois le diamètre du rotor de l'aéronef, l'aéronef ne subit plus d'effet de sol. On dit alors que l'aéronef est hors effet de sol, défini par les acronymes HES ou bien OGE pour l'expression en langue anglaise « Out Ground Effect ».

Le coefficient d'influence $k$ est égal à l'unité lorsque l'aéronef est dans une zone HES. Ce coefficient d'influence $k$ varie selon la hauteur $Hz$ de l'aéronef par rapport au sol d'une valeur minimum à une valeur maximum lorsque l'aéronef est dans une zone DES. La valeur maximum est égale généralement à 1.1 pour l'ensemble des aéronefs alors que la valeur minimum, qui correspond à un aéronef au niveau du sol, varie selon l'aéronef et peut être comprise entre 0.6 et 0.9. Le coefficient d'influence k est par exemple compris entre 0.6 et 1.1 pour un aéronef donné.

Ainsi, pour déterminer la masse instantanée mesurée $M_m$ de l'aéronef dans le cas d'un vol stationnaire,

- on calcule le coefficient de réduction $\sigma$ tel que

$$\sigma = \left(\frac{P_0}{T_0}\right),$$

$P_0$ et $T_0$ étant respectivement la pression atmosphérique et la température autour de l'aéronef, la pression atmosphérique $P_0$ étant exprimée en millibar (mb) et la température $T_0$ étant exprimée en kelvin (K),

- on calcule une première valeur $A_1$ telle que

$$A_1 = \frac{W}{\sigma} \cdot \left(\frac{NR_0}{NR}\right)^3,$$

- on détermine, grâce à une première courbe de performances de l'aéronef selon la première fonction $f_1$ correspondant aux conditions de vol de l'aéronef et en fonction de la première valeur $A_1$, une seconde valeur $A_2$ telle que

$$A_2 = f_1\left[\frac{M_m}{\sigma} \cdot \left(\frac{NR_0}{NR}\right)^2\right] = \frac{\frac{M_m}{\sigma} \cdot \left(\frac{NR_0}{NR}\right)^2}{k},$$

- on détermine le coefficient d'influence $k$ selon la hauteur $Hz$ de l'aéronef par rapport au sol, et
- on calcule à partir de la seconde valeur $A_2$ la masse instantanée mesurée $M_m$ de l'aéronef, telle que

$$M_m = k.A_2.\sigma.\left(\frac{NR}{NR_0}\right)^2.$$

Dans le cas où l'aéronef est en vol ascensionnel, les caractéristiques fonctionnelles de l'aéronef sont notamment définies par deux séries de secondes et troisièmes courbes de performances selon respectivement

une seconde formule

$$\left(\frac{W}{\sigma}\right)\Big/\left(\frac{W'}{\sigma}\right)_{Vy} = f_2(Vz)$$

et

une troisième formule

$$\left(\frac{W'}{\sigma}\right)_{Vy} = f_3\left(\frac{M_m}{\sigma}\right).$$

Dans ces conditions, $W$ est la puissance de vol de l'aéronef, $\sigma$ est le coefficient de réduction, $M_m$ est la masse instantanée mesurée de l'aéronef, $Vz$ est la vitesse verticale de l'aéronef et $Vy$, désignée communément par l'expression « vitesse optimale de montée », est la composante horizontale de la vitesse de l'aéronef qui permet d'atteindre la meilleure vitesse verticale de montée.

La seconde fonction $f_2$ concerne un vol ascensionnel alors que la troisième fonction $f_3$ concerne un vol

en palier. Ces seconde et troisième fonctions $f_2$, $f_3$ sont respectivement représentées par deux séries de courbes de performances de l'aéronef. Un premier rapport $\left(\frac{W}{\sigma}\right)$ est obtenu pour une vitesse verticale $Vz$ quelconque de l'aéronef, la puissance de vol $W$ correspondant à cette vitesse verticale $Vz$, alors qu'un second rapport $\left(\frac{W'}{\sigma}\right)_{Vy}$ est obtenu pour une vitesse $Vh'$ de l'aéronef uniquement horizontale et égale à la vitesse optimale de montée $Vy$, la puissance de vol $W'$ correspondant à cette vitesse horizontale $Vh'$.

Ainsi, pour déterminer la masse instantanée mesurée $M_m$ de l'aéronef dans le cas d'un vol ascensionnel,

- on détermine grâce à une seconde courbe de performances de l'aéronef selon la seconde fonction $f_2$ correspondant aux conditions de vol de l'aéronef et en fonction de la vitesse verticale $Vz$ de l'aéronef une troisième valeur $A_3$ telle que

$$A_3 = f_2(Vz) = \left(\frac{W}{\sigma}\right)\Big/\left(\frac{W'}{\sigma}\right)_{Vy},$$

- on calcule le coefficient de réduction $\sigma$ tel que

$$\sigma = \left(\frac{P_0}{T_0}\right),$$

- on calcule à partir de la troisième valeur $A_3$, de la puissance de vol $W$ et du coefficient de réduction $\sigma$ une quatrième valeur $A_4$ telle que

$$A_4 = \left(\frac{W}{\sigma}\right)\Big/A_3 = \left[\left(\frac{W'}{\sigma}\right)_{Vy}\right],$$

- on détermine grâce à une troisième courbe de performances de l'aéronef selon la troisième fonction $f_3$ et correspondant aux conditions de vol de l'aéronef et en fonction de la quatrième valeur $A_4$ qui est telle

que

$$A_4 = \left[\left(\frac{W'}{\sigma}\right)_{Vy}\right] = f_3\left(\frac{M_m}{\sigma}\right),$$

une cinquième valeur $A_5$ telle que

$$A_5 = \left(\frac{M_m}{\sigma}\right),$$

et

- on calcule à partir de la cinquième valeur $A_5$ la masse instantanée mesurée $M_m$ de l'aéronef telle que

$$M_m = A_5 . \sigma.$$

Dans le cas où l'aéronef est en vol en palier, les caractéristiques fonctionnelles de l'aéronef sont notamment définies par deux séries de troisièmes et quatrièmes courbes de performances selon la troisième formule $\left(\frac{W'}{\sigma}\right)_{Vy} = f_3\left(\frac{M_m}{\sigma}\right)$ et une formule $\left(\frac{W}{\sigma}\right)\Big/\left(\frac{W'}{\sigma}\right)_{Vy} = f_4\left[\left(\frac{Vh}{Vy}\right)^3, \frac{M_m}{\sigma}\right].$ Dans ces conditions, $W$ est la puissance de vol de l'aéronef, $\sigma$ est le coefficient de réduction, $M_m$ est la masse instantanée mesurée de l'aéronef, $Vh$ est la vitesse horizontale de l'aéronef, $Vy$ est la vitesse optimale de montée de l'aéronef.

Les troisième et quatrième fonctions $f_3$, $f_4$ concernent un vol en palier et sont respectivement représentées par deux séries de courbes de performances de l'aéronef. Le premier rapport $\left(\frac{W}{\sigma}\right)$ est obtenu pour une vitesse horizontale $Vh$ quelconque de l'aéronef, la puissance de vol $W$ correspondant à cette vitesse horizontale $Vh$, alors que le second rapport $\left(\frac{W'}{\sigma}\right)_{Vy}$ est obtenu pour une vitesse horizontale $Vh'$ de l'aéronef uniquement horizontale et égale à la vitesse optimale de montée $Vy$ d'une vitesse verticale optimale de montée de l'aéronef, la puissance optimale $W'$ correspondant à cette vitesse horizontale $Vh'$. On détermine alors la masse instantanée mesurée $M_m$ de l'aéronef qui permet de résoudre simultanément les troisième et quatrième formules, selon les valeurs de la puissance de vol $W$ et les valeurs de la vitesse horizontale $Vh$ de l'aéronef.

Par exemple, pour déterminer la masse instantanée mesurée $M_m$ de l'aéronef dans le cas d'un vol en palier,

- on calcule une sixième valeur $A_6$ telle que $A_6 = \left(\frac{Vh}{Vy}\right)^3$ en fonction de la vitesse horizontale $Vh$ et de la vitesse optimale de montée $Vy$ de l'aéronef, cette vitesse optimale de montée pétant une caractéristique connue de l'aéronef,

- on détermine grâce à une série de quatrièmes courbes de performances de l'aéronef selon la quatrième fonction $f_4$ et en fonction de cette sixième valeur $A_6$

des premiers couples formés d'une troisième valeur $A_3$ et d'une cinquième valeur $A_5$ telle que $A_3 = \left(\frac{W}{\sigma}\right)\Big/\left(\frac{W'}{\sigma}\right)_{Vy}$ et $A_5 = \frac{M_m}{\sigma}$,

- on calcule le coefficient de réduction $\sigma$ tel que $\sigma = \left(\frac{P_0}{T_0}\right)$,

- on calcule à partir de chaque troisième valeur $A_3$, de la puissance de vol $W$ et du coefficient de réduction $\sigma$ une quatrième valeur $A_4$ telle que $A_4 = \left(\frac{W}{\sigma}\right)\Big/A_3 = \left[\left(\frac{W'}{\sigma}\right)_{Vy}\right],$ afin de former des seconds couples formés d'une quatrième valeur $A_4$ et d'une cinquième valeur $A_5$,

- on détermine le second couple formé d'une quatrième valeur $A_4$ et d'une cinquième valeur $A_5$ résolvant la troisième formule grâce à une troisième courbe de performances de l'aéronef selon la troisième fonction $f_3$ et correspondant aux conditions de vol de l'aéronef, et

- on calcule à partir de la cinquième valeur $A_5$ de ce second couple résolvant la troisième formule la masse instantanée mesurée $M_m$ de l'aéronef telle que $M_m = A_5 . \sigma$.

Afin d'obtenir une masse instantanée estimée $M$ de l'aéronef fiable et consolidée, on peut comparer la masse instantanée mesurée $M_m$ de l'aéronef ainsi obtenue avec une masse instantanée calculée $M_c$ qui est déterminée par une autre méthode, par exemple à partir de la variation de la quantité de carburant présent dans l'aéronef. Cette comparaison de la masse instantanée mesurée $M_m$ et de la masse instantanée calculée $M_c$ peut être faite au cours d'un vol de l'aéronef de façon arithmétique ou bien de façon statistique.

Avantageusement, cette comparaison permet d'avoir une continuité de cette information d'une masse instantanée estimée M. Ainsi, lorsque que la masse instantanée mesurée $M_m$ et la masse instantanée calculée $M_c$ sont disponibles simultanément, on peut les comparer et obtenir la masse instantanée estimée M. Par contre, lorsque la masse instantanée mesurée $M_m$ n'est pas disponible, l'aéronef se trouvant dans une phase de vol non couverte par des courbes de performances exploitables, aucune comparaison n'est possible. Cependant, la disponibilité de la masse instantanée calculée $M_c$ permet tout de même de fournir une masse instantanée estimée $M$ égale à cette masse instantanée calculée $M_c$. La non disponibilité de la masse instantanée mesurée $M_m$ n'étant que transitoire, une masse instantanée estimée $M$ peut rapidement être de nouveau fournie.

Un aéronef comporte au moins un réservoir, et généralement plusieurs réservoirs, dans lesquels est stocké le carburant. Cette masse instantanée calculée $M_c$ de l'aéronef peut être déterminée à partir de la quantité de carburant restant dans l'aéronef ou bien de la quantité de carburant consommé depuis un instant initial $t_0$ tel que celui du décollage de l'aéronef.

Par exemple, on mesure un débit volumétrique instantanée $Dv_i$ de consommation d'un carburant alimentant l'installation motrice et on mesure la température instantanée $T_i$ de ce carburant. On calcule ensuite un débit massique instantané $Dm_i$ du carburant. On détermine alors la masse $Mcc$ du carburant consommé depuis un instant initial $t_0$ par intégration du débit massique instantané $Dm_i$ du carburant depuis l'instant initial $t_0$. On connaît par ailleurs la masse initiale totale $M_0$ de l'aéronef à l'instant initial $t_0$. On calcule enfin la masse instantanée calculée $M_c$ qui est égale à la masse initiale totale $M_0$ à laquelle est soustraite la masse $M_{cc}$ du carburant consommé.

On peut également mesurer un volume $V_{CR}$ du carburant restant dans l'ensemble des réservoirs et la température instantanée $T_i$ de ce carburant. On calcule ensuite la masse $M_{CR}$ de ce carburant restant dans l'ensemble des réservoirs. On connaît par ailleurs la masse $M_{CRt_0}$ du carburant restant dans l'ensemble des réservoirs et la masse initiale totale $M_0$ de l'aéronef à l'instant initial $to$. On détermine alors la masse $M_{CC}$ du carburant consommé depuis un instant initial $t_0$ en soustrayant de la masse $M_{CRt_0}$ du carburant la masse $M_{CRt}$ du carburant restant à l'instant $t$. On calcule enfin la masse instantanée calculée $M_c$ qui est égale à la masse initiale totale $M_0$ de l'aéronef à l'instant initial $to$ à laquelle est soustraite la masse $M_{CC}$ du carburant consommé.

De même, on peut mesurer un volume $V_{CR}$ du carburant restant dans l'ensemble des réservoirs et la température instantanée $T_i$ de ce carburant. On calcule ensuite la masse $M_{CR}$ du carburant restant dans l'ensemble des réservoirs. On connaît par ailleurs la masse initiale $M_1$ hors carburant de l'aéronef à l'instant initial $t_0$. On calcule alors la masse instantanée calculée $M_c$ qui est égale à la masse initiale $M_1$ hors carburant de l'aéronef à laquelle est ajoutée la masse $M_{CR}$ du carburant restant.

On peut alors comparer au cours du vol de l'aéronef de façon arithmétique la masse instantanée mesurée $M_m$ et la masse instantanée calculée $M_c$ et déterminer ainsi un premier écart entre elles. Ainsi, si ce premier écart est inférieur ou égal à un seuil d'erreur prédéterminé, la masse instantanée mesurée $M_m$ est considérée comme une masse instantanée estimée $M$ fiable et utilisable alors que si ce premier écart est supérieur à ce seuil d'erreur, la masse instantanée mesurée $M_m$ est considérée comme une masse instantanée estimée $M$ non utilisable et on émet une alerte afin d'en informer le pilote de l'aéronef.

En outre, si ce premier écart est important et positif, il peut permettre également d'identifier soit un déchargement d'une charge utile ou bien le largage d'une charge sous élingue. Au contraire, si ce premier écart est négatif et important en valeur absolue, on peut déduire qu'un chargement d'une charge utile ou bien l'accrochage d'une charge sous élingue a été effectué.

En effet, la masse instantanée mesurée $M_m$ déterminée à partir des courbes de performances de l'aéronef prend en compte tout changement de la masse totale de l'aéronef, y compris le chargement ou le déchargement d'une charge utile. A contrario, la masse instantanée calculée $M_c$ prend en compte uniquement la variation de la quantité de carburant de l'aéronef, indépendamment de la masse totale de l'aéronef.

Dans le cas d'un premier écart important en valeur absolue, le pilote peut confirmer le chargement ou le déchargement d'une charge utile, confirmant ainsi la fiabilité de la masse instantanée mesurée $M_m$.

On peut également comparer une première différence entre la masse instantanée mesurée $M_m$ et une masse initiale ainsi qu'une seconde différence entre la masse instantanée calculée $M_c$ et cette masse initiale. La masse instantanée mesurée $M_m$ et la masse instantanée calculée $M_c$ sont par exemple déterminées à un instant $t$ et la masse initiale est déterminée à l'instant initial $t_0$. Cet instant initial $t_0$ correspond à un moment particulier du vol, tel que le chargement ou le déchargement d'une charge utile par exemple, et cette masse initiale est une valeur fixe et constante. Cet instant initial $t_0$ est de préférence l'instant de décollage de l'aéronef et la masse initiale est la masse de l'aéronef au décollage.

On peut alors déterminer un second écart entre la première différence et la seconde différence. Si ce second écart est inférieur ou égal au seuil d'erreur, la masse instantanée mesurée $M_m$ est considérée comme une masse instantanée estimée $M$ fiable et utilisable alors que si ce second écart est supérieur à ce seuil d'erreur, la masse instantanée mesurée $M_m$ est considérée comme une masse instantanée estimée $M$ non utilisable et on émet une alerte afin d'en informer le pilote de l'aéronef.

En outre, ce second écart, s'il est important en valeur absolue, peut également permettre d'identifier comme précédemment évoqué le chargement ou bien le déchargement d'une charge utile de l'aéronef.

On peut aussi comparer de façon statistique les valeurs de la masse instantanée mesurée $M_m$ et de la masse instantanée calculée $M_c$ au cours d'un vol de l'aéronef afin de déterminer une valeur de la masse instantanée estimée $M$ consolidée, fiable et précise.

On peut ainsi comparer l'évolution de la masse instantanée de l'aéronef grâce aux différentes valeurs de la masse instantanée mesurée $M_m$ et de la masse instantanée calculée $M_c$ de l'aéronef au cours d'un vol par une analyse statistique. On peut également comparer par une analyse statistique l'évolution des premières et secondes différences au cours d'un vol.

On peut par exemple, calculer une première moyenne ou une seconde moyenne respectivement des premiers écarts ou des seconds écarts déterminés entre l'instant $t$ et l'instant initial $t_0$ au cours du vol de l'aéronef. Ensuite, on peut comparer cette première moyenne ou bien cette seconde moyenne avec le seuil d'erreur afin de déterminer si la masse instantanée mesurée $M_m$ peut être considérée comme une masse instantanée estimée $M$ fiable et consolidée et, par suite, utilisable.

En plus de la première moyenne ou la seconde moyenne, on peut calculer un premier ou un second écart type associé respectivement aux premiers et seconds écarts, puis analyser le premier ou le second écart type afin de déterminer si la masse instantanée mesurée $M_m$ peut être considérée comme une masse instantanée estimée $M$ fiable et consolidée.

On peut également, à partir des valeurs de la masse instantanée mesurée $M_m$ et de la masse instantanée calculée $M_c$ déterminées entre un instant $t$ et l'instant initial $t_0$, recalculer la masse initiale de l'aéronef à l'instant initial $t_0$ et vérifier ainsi que cette masse initiale est bien constante entre l'instant $t$ et l'instant initial $t_0$. Une telle analyse statistique peut être effectuée à partir des valeurs de la masse instantanée mesurée $M_m$ et de la consommation de carburant de l'aéronef au cours d'un vol.

Par ailleurs, une telle analyse statistique peut être effectuée par l'intermédiaire d'au moins un filtre de Kalman et permettre ainsi de consolider la masse instantanée estimée $M$ de l'aéronef en comparant les valeurs de la masse instantanée mesurée $M_m$ et de la masse instantanée calculée $M_c$ par l'intermédiaire par exemple de la masse de carburant consommé $Mcc$ par l'aéronef.

- on détermine tout d'abord un vecteur de mesure $Z_m$

$$Z_m \begin{pmatrix} M_m \\ M_{CC} \end{pmatrix},$$

tel que $M_m$ étant la masse instantanée mesurée de l'aéronef et $M_{CC}$ étant la masse de carburant consommé de l'aéronef,

- on définit un vecteur d'état $X$ à déterminer tel que

$$X \begin{pmatrix} M \\ M_0 \end{pmatrix},$$

$M$ étant une masse instantanée estimée de l'aéronef et $Mo$ étant la masse initiale totale de l'aéronef,

- on définit une équation d'état $X = A.X + B.Dm_i$, avec

$$A = \begin{bmatrix} 0 & 0 \\ 0 & 0 \end{bmatrix} \text{ et } B = \begin{bmatrix} -1 \\ 0 \end{bmatrix},$$

$Dm_i$ étant le débit massique instantané du carburant qui est égal à la dérivée de la masse de carburant consommé $M_{CC}$ de l'aéronef, $\dot{X}$ étant la dérivée du vecteur d'état $X$,

- on définit une équation de mesures $Z_m = C.X$, avec

$$C = \begin{bmatrix} 1 & 0 \\ -1 & 1 \end{bmatrix},$$

- on applique l'équation d'état et l'équation de mesure à un filtre de Kalman afin de déterminer le vecteur d'état $X$, et par suite la masse instantanée estimée $M$ et la masse initiale totale $M_0$ de l'aéronef.

D'une manière analogue, en utilisant au moins un filtre de Kalman, on peut également consolider la masse instantanée estimée $M$ de l'aéronef par l'intermédiaire de la masse de carburant restant $M_{CR}$ dans les réservoirs de l'aéronef.

La présente invention a aussi pour objet un dispositif d'estimation de la masse instantanée d'un aéronef à voilure tournante. Un aéronef à voilure tournante comporte généralement une installation motrice munie d'au moins un moteur et d'une boîte de transmission principale de puissance, la boîte de transmission principale de puissance entrainant en rotation au moins un rotor principal et un rotor anticouple. L'aéronef comporte également une pluralité de capteurs fournissant des mesures sur l'environnement de l'aéronef ainsi que sur le fonctionnement de l'aéronef et de ces équipements, tels que son installation motrice et le rotor principal en particulier.

Ce dispositif d'estimation de la masse instantanée comporte au moins un moyen de calcul et au moins une mémoire, une mémoire stockant des courbes de performances de l'aéronef et des instructions de calculs. Le moyen de calcul reçoit les mesures des capteurs et peut appliquer les instructions de calculs afin de mettre en oeuvre le procédé d'estimation de la masse instantanée d'un aéronef à voilure tournante précédemment décrit.

Ce dispositif d'estimation de la masse instantanée peut comporter au moins un filtre de Kalman afin de comparer de façon statistique l'évolution de la masse instantanée mesurée $M_m$ et l'évolution de la masse instantanée calculée $M_c$ de l'aéronef au cours d'un vol et de déterminer ainsi une valeur consolidée, précise et fiable de la masse instantanée estimée $M$ de l'aéronef.

L'invention et ses avantages apparaîtront avec plus de détails dans le cadre de la description qui suit avec des exemples donnés à titre illustratif en référence aux figures annexées qui représentent :

- la figure 1, un aéronef à voilure tournante muni d'un dispositif d'estimation de la masse instantanée de l'aéronef,
- la figure 2, un schéma synoptique d'un procédé d'estimation de la masse instantanée de l'aéronef,
- les figures 3 à 7, des courbes de performances de l'aéronef
- la figure 8, une architecture utilisant un filtre de Kalman pour déterminer la masse instantanée estimée $M$, et
- la figure 9, une courbe représentant l'évolution de la masse initiale $M_0$ estimée par cette architecture.

Les éléments présents dans plusieurs figures distinctes sont affectés d'une seule et même référence.

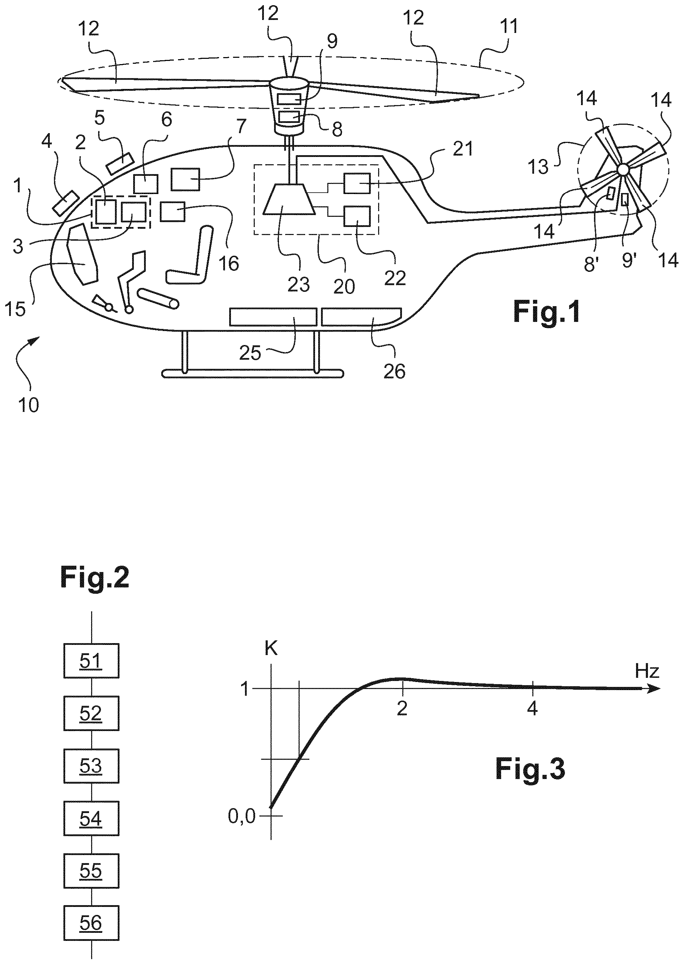

Sur la figure 1 est représenté un aéronef 10 à voilure tournante comportant un rotor principal 11 muni de pales principales 12, un rotor arrière 13 ayant notamment une fonction anticouple, ce rotor arrière 13 étant muni de pales secondaires 14. L'aéronef 10 comporte également une pluralité de capteurs 4-9, un tableau de bord 15, une installation motrice 20 munie de deux turbomoteurs 21,22 et d'une boîte de transmission principale de puissance 23 entraînant en rotation le rotor principal 11 et le rotor arrière 13. Les capteurs 4-9 permettent de mesurer différentes informations relatives à l'environnement de l'aéronef 10, à l'état et au fonctionnement de l'aéronef 10 et du rotor principal 11.

L'aéronef 10 comporte enfin un dispositif 1 d'estimation de la masse instantanée de l'aéronef 10 muni d'un moyen de calcul 2 et d'une mémoire 3.

Des capteurs atmosphériques 4,5 permettent de mesurer des caractéristiques atmosphériques relatives à l'environnement de l'aéronef 10 et sont par exemple un moyen de mesure de la pression atmosphérique $P_0$ et un moyen de mesure de la température extérieure $T_0$ autour de l'aéronef 10.

Les capteurs 6,7 permettent de mesurer des caractéristiques de vol relatives à la vitesse et à la position de l'aéronef 10. Le capteur de vitesse 6 mesure par exemple la vitesse par rapport à l'air de l'aéronef 10 selon trois directions privilégiées de l'aéronef 10 telles que des directions longitudinale, transversal et d'élévation. Cette vitesse par rapport à l'air de l'aéronef 10 peut être décomposée en une vitesse horizontale $Vh$ et une vitesse verticale $Vz$, les directions horizontale et verticale étant définies dans un repère terrestre grâce à un moyen de détermination de l'attitude et du cap 16 tel un dispositif AHRS pour l'expression en langue anglaise « Attitude and Heading Reference System » que comporte l'aéronef 10. Par ailleurs, la vitesse verticale $Vz$ est généralement déterminée en utilisant un calcul de la dérivée de la variation de l'altitude de l'aéronef mesurée grâce à des mesures de la pression statique.

Le capteur 7 est par exemple un radioaltimètre déterminant la hauteur $Hz$ de l'aéronef 10 par rapport au sol.

Enfin, les capteurs de puissance 8,9 et 8',9' permettent de mesurer des caractéristiques de puissance relatives respectivement aux fonctionnements du rotor principal 11 et du rotor arrière 13 de l'aéronef 10. Les capteurs 8,9 sont par exemple des moyens de mesure respectivement du couple $C_R$ et de la vitesse réelle de rotation $NR$ de ce rotor principal 11. De même, les capteurs 8',9' sont des moyens de mesure respectivement du couple $C_{RAC}$ et de la vitesse réelle de rotation $NR_{AC}$ de ce rotor arrière 13.

Des capteurs supplémentaires non représentés sur les figures peuvent également permettre de mesurer des caractéristiques de puissance relatives au fonctionnement de l'installation motrice 20. Ces capteurs supplémentaires sont par exemple des moyens de mesure du couple $C_{im}$ et de la vitesse de rotation $NR_{im}$ d'un arbre principal de sortie de l'installation motrice 20.

Le dispositif 1 peut mettre en oeuvre un procédé d'estimation de la masse instantanée de l'aéronef 10 dont le schéma synoptique est représenté sur la figure 2. La mémoire 3 stocke des courbes de performances de l'aéronef 10 et des instructions de calcul. Le moyen de calcul 2 applique ces instructions de calcul afin de mettre en oeuvre ce procédé.

Le procédé selon la figure 2 comporte six étapes.

Au cours d'une première étape 51, on mesure des caractéristiques de vol de l'aéronef 10, telles que la vitesse horizontale $Vh$, la vitesse verticale $Vz$ de l'aéronef 10 par l'intermédiaire du capteur de vitesse 6 et la hauteur $Hz$ de l'aéronef 10 par rapport au sol par l'intermédiaire du radioaltimètre 7.

Au cours d'une deuxième étape 52, on mesure des caractéristiques de puissance de l'aéronef 10, telles que le couple $C_R$ et la vitesse réelle de rotation $NR$ du rotor principal 11, par l'intermédiaire des capteurs de puissance 8,9 ainsi que le couple $C_{RAC}$ et la vitesse réelle de rotation $NR_{AC}$ dudit rotor anticouple 13, par l'intermédiaire des capteurs de puissance 8',9'.

Au cours d'une troisième étape 53, on mesure des caractéristiques atmosphériques relatives à l'environnement de l'aéronef 10, telles que la pression atmosphérique $P_0$ et la température $T_0$ de l'air autour de l'aéronef 10 par l'intermédiaire des capteurs atmosphériques 4,5.

Au cours d'une quatrième étape 54, on détermine la puissance de vol $W$ de l'aéronef 10. Cette puissance de vol $W$, assurant la sustentation et les déplacements de l'aéronef 10, est répartie entre le rotor principal 11 et le rotor arrière 13. Cette puissance de vol $W$ est donc égale à la somme des puissances consommées par le rotor principal 11 et par le rotor arrière 13. Par ailleurs, cette puissance de vol $W$ est égale à la puissance totale fournie par l'installation motrice 20 à laquelle est soustraite une puissance accessoire $W_{acc}$ nécessaire pour alimenter les différents équipements de l'aéronef 10.

Au cours d'une cinquième étape 55, on détermine un point de fonctionnement de l'aéronef 10 sur au moins une série de courbes de performances de l'aéronef 10 en fonction des caractéristiques de vol de l'aéronef 10, des caractéristiques atmosphériques et de la puissance de vol $W$.

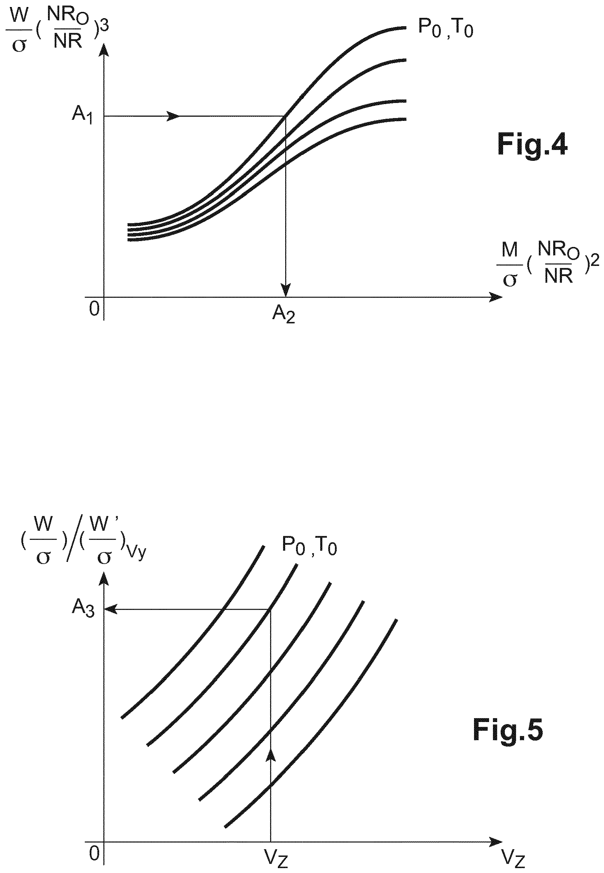

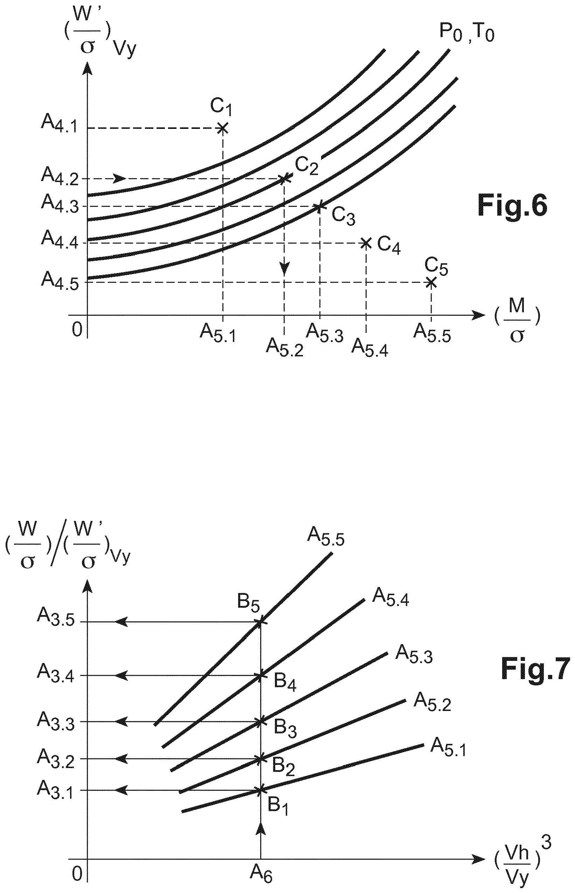

Ces séries de courbes de performances sont constituées de plusieurs courbes, comme représenté sur les figures 4 à 7, en fonction de caractéristiques atmosphériques ou bien de caractéristiques de l'aéronef 10 telles que sa masse par exemple. Ces séries de courbes de performances sont spécifiques à l'aéronef 10 et permettent de caractériser le fonctionnement de l'aéronef 10 et en particulier sa puissance de vol $W$ selon les différentes phases de vol. Ces séries de courbes de performances couvrent les principales phases de vol de l'aéronef 10 qui sont le vol stationnaire pour les premières courbes représentées sur la figure 4, le vol ascensionnel pour les secondes courbes représentées sur la figure 5 ou bien le vol en palier pour les troisièmes et quatrièmes courbes représentées respectivement sur les figures 6 et 7.

Afin de définir la phase de vol de l'aéronef 10 et, par suite, la ou les séries de courbes de performances à prendre en compte, on peut utiliser un algorithme de sélection utilisant les valeurs de la vitesse horizontale *Vh* et la vitesse verticale *Vz* de l'aéronef 10.

En effet, un vol stationnaire correspond à une vitesse horizontale *Vh* et une vitesse verticale *Vz* de l'aéronef 10 sensiblement nulles. Un vol ascensionnel, qui concerne aussi bien un vol montant qu'un vol descendant, correspond à une vitesse verticale *Vz* et une vitesse horizontale *Vh* non nulles. Un vol en palier correspond à une vitesse verticale *Vz* sensiblement nulle et à une vitesse horizontale *Vh* non nulle.

Au cours d'une sixième étape 56, on déduit la masse instantanée mesurée $M_m$ de l'aéronef 10 des courbes de performances représentées sur les figures 4 à 7, des caractéristiques de vol de l'aéronef 10, des caractéristiques atmosphériques et de la puissance de vol *W*.

Dans le cas où l'aéronef 10 est en vol stationnaire, on utilise la série de premières courbes de performances représentées sur la figure 4 selon une première formule $\frac{W}{\sigma} \cdot \left(\frac{NR_0}{NR}\right)^3 = k.f_1\left[\frac{M_m}{\sigma} \cdot \left(\frac{NR_0}{NR}\right)^2\right].$ Chaque première courbe de cette série correspond à un couple de pression atmosphérique et de température de l'air autour de l'aéronef 10.

On calcule tout d'abord le coefficient de réduction $\sigma$ tel que $\sigma = \left(\frac{P_0}{T_0}\right)$ en fonction la pression atmosphérique $P_0$ exprimée en millibar (mb) et de la température $T_0$ de l'air autour de l'aéronef 10 exprimée en kelvin (K) mesurées par l'intermédiaire des capteurs atmosphériques 4,5.

Puis, on calcule une première valeur $A_1$ telle que $A_1 = \frac{W}{\sigma} \cdot \left(\frac{NR_0}{NR}\right)^3,$ $NR_0$ étant une vitesse de consigne de rotation du rotor principal 11.

Ensuite, on détermine, grâce à la première courbe de performances de l'aéronef 10 correspondant à la pression atmosphérique $P_0$ et à la température $T_0$ de l'air autour de l'aéronef 10, et en fonction de la première valeur $A_1$, une seconde valeur $A_2$ telle que $A_2 = f_1\left[\frac{M_m}{\sigma} \cdot \left(\frac{NR_0}{NR}\right)^2\right] = \frac{\frac{M_m}{\sigma} \cdot \left(\frac{NR_0}{NR}\right)^2}{k},$ comme indiqué sur la figure 4.

On détermine alors le coefficient d'influence *k* selon la hauteur *Hz* de l'aéronef 10 par rapport au sol mesurée par exemple par l'intermédiaire du radioaltimètre 7. Le coefficient d'influence *k* est spécifique à chaque aéronef 10 et défini par une courbe d'influence du sol représentée sur la figure 3 en fonction de la hauteur *Hz* de l'aéronef 10 par rapport au sol exprimée en fonction du nombre de diamètres du rotor principal 11. Sur la courbe représentée sur la figure 3, ce coefficient d'influence *k* est compris entre 0.9 et 1.1. Le coefficient d'influence *k* est généralement égal à l'unité ce qui correspond à un vol stationnaire de l'aéronef 10 dans une zone HES, c'est-à-dire une zone hors effet de sol.

Enfin, on calcule à partir notamment de la seconde valeur $A_2$ la masse instantanée mesurée $M_m$ de

$$M_m = k. A_2. \sigma. \left(\frac{NR}{NR_0}\right)^2.$$

l'aéronef 10, telle que

Dans le cas où l'aéronef 10 est en vol ascensionnel, on utilise une série de secondes courbes de performances représentées sur la figure 5 selon une seconde de formule $\left(\frac{W}{\sigma}\right) \bigg/ \left(\frac{W\prime}{\sigma}\right)_{Vy} = f_2(Vz).$ On utilise également une série de troisièmes courbes de performances représentées sur la figure 6 selon une troisième formule $\left(\frac{W\prime}{\sigma}\right)_{Vy} = f_3\left(\frac{M_m}{\sigma}\right).$ Cette troisième formule correspond en fait à un vol en palier de l'aéronef 10 avec une vitesse horizontale *Vh'* égale à la vitesse optimale de montée *Vy* de l'aéronef 10, le second rapport $\left(\frac{W\prime}{\sigma}\right)_{Vy}$ étant obtenu pour une telle vitesse *Vh'* de l'aéronef 10. Chaque seconde et troisième courbe correspond à un couple de pression atmosphérique et de température de l'air autour de l'aéronef 10.

On détermine tout d'abord grâce à la seconde courbe de performances correspondant à la pression atmosphérique $P_0$ et à la température $T_0$ de l'air autour de l'aéronef 10 et en fonction de la vitesse verticale *Vz* de l'aéronef 10 une troisième valeur $A_3$ telle que

$$A_3 = f_2(Vz) = \left(\frac{W}{\sigma}\right) \bigg/ \left(\frac{W\prime}{\sigma}\right)_{Vy},$$

comme indiqué sur la figure 5.

Puis, on calcule le coefficient de réduction $\sigma$ tel que $\sigma = \left(\frac{P_0}{T_0}\right).$

Ensuite, on calcule à partir de la troisième valeur $A_3$, de la puissance de vol *W* et du coefficient de réduction $\sigma$ une quatrième valeur $A_4$ telle que

$$A_4 = \left(\frac{W}{\sigma}\right)\Big/ A_3 = \left[\left(\frac{W\prime}{\sigma}\right)_{Vy}\right].$$

On détermine alors grâce à la troisième courbe de performances correspondant à la pression atmosphérique $P_0$ et à la température $T_0$ de l'air autour de l'aéronef 10, et en fonction de la quatrième valeur $A_4$ qui est telle

que $A_4 = \left[\left(\frac{W\prime}{\sigma}\right)_{Vy}\right] = f_3\left(\frac{M_m}{\sigma}\right),$ une cinquième

valeur $A_5$ telle que $A_5 = \left(\frac{M_m}{\sigma}\right),$ comme indiqué sur la figure 6. Les quatrième et cinquième valeurs concernées sont respectivement notées $A_{4.2}$ et $A_{5.2}$ sur la figure 6.

Enfin, on calcule à partir de la cinquième valeur $A_5$ et du coefficient de réduction $\sigma$ la masse instantanée mesurée $M_m$ telle que $M_m = A_5 . \sigma$.

Dans le cas où l'aéronef 10 est en vol en palier, on utilise deux séries de troisièmes et quatrièmes courbes de performances représentées sur les figures 6 et 7 selon respectivement la troisième formule

$\left(\frac{W\prime}{\sigma}\right)_{Vy} = f_3\left(\frac{M_m}{\sigma}\right)$ et une quatrième formule

$\left(\frac{W}{\sigma}\right)\Big/\left(\frac{W\prime}{\sigma}\right)_{Vy} = f_4\left[\left(\frac{Vh}{Vy}\right)^3, \frac{M_m}{\sigma}\right].$ Chaque quatrième courbe correspond à un troisième rapport $\left(\frac{M_m}{\sigma}\right).$

On détermine alors la masse instantanée mesurée $M_m$ qui permet de résoudre simultanément les troisième et quatrième formules, selon les valeurs de la puissance de vol $W$ et de la vitesse horizontale $Vh$ de l'aéronef 10.

Afin de résoudre simultanément ces deux formules, on calcule par exemple tout d'abord une sixième

valeur $A_6$ telle que $A_6 = \left(\frac{Vh}{Vy}\right)^3$ en fonction de la vitesse horizontale $Vh$ et de la vitesse optimale de montée $Vy$ de l'aéronef 10.

Ensuite, on détermine grâce à la série de quatrièmes courbes de performances et en fonction de cette sixième valeur $A_6$ des premiers couples $B_i$ formés d'une troisième valeur $A_3$ et d'une cinquième valeur $A_5$ telles

que $A_3 = \left(\frac{W}{\sigma}\right)\Big/\left(\frac{W\prime}{\sigma}\right)_{Vy}$ et $A_5 = \frac{M_m}{\sigma}.$ On obtient ainsi comme indiqué sur la figure 6 cinq premiers couples

$B_i \begin{bmatrix} A_{3.i} \\ A_{5.i} \end{bmatrix}$ formés respectivement d'une troisième valeur $A_{3.1}$-$A_{3.5}$ et d'une cinquième valeur $A_{5.1}$-$A_{5.5}$.

Chaque cinquième valeur $A_{5.i}$ correspond à une quatrième courbe de performances et chaque troisième valeur $A_{3.i}$ forme avec la sixième valeur $A_6$ un point de cette quatrième courbe.

Puis, on calcule le coefficient de réduction $\sigma$ tel

que $\sigma = \left(\frac{P_0}{T_0}\right).$

On calcule alors à partir de chaque troisième valeur $A_{3.1}$-$A_{3.5}$, de la puissance de vol $W$ et du coefficient de réduction $\sigma$ une quatrième valeur $A_{4.1}$-$A_{4.5}$ telle que

$A_4 = \left(\frac{W}{\sigma}\right)\Big/ A_3 = \left[\left(\frac{W\prime}{\sigma}\right)_{Vy}\right].$ On forme alors des seconds couples $C_i \begin{bmatrix} A_{4.i} \\ A_{5.i} \end{bmatrix}$ formés respectivement d'une quatrième valeur $A_{4.1}$-$A_{4.5}$ et d'une cinquième valeur $A_{5.1}$-$A_{5.5}$.

Parmi ces seconds couples $C_i$, un seul permet de définir, comme indiqué sur la figure 6, un point de fonctionnement situé sur la troisième courbe de performances correspondant à la pression atmosphérique $P_0$ et à la température $T_0$ ou bien situé à proximité de cette troisième courbe de performances. On détermine ainsi le second couple $C_2$ formé d'une quatrième valeur $A_{4.2}$ et d'une cinquième valeur $A_{5.2}$ résolvant la troisième formule en fonction de la pression atmosphérique $P_0$ et de la température $T_0$.

Les autres second couples $C_1$, $C_3$-$C_5$ ne permettent en effet pas de résoudre la troisième formule en prenant en compte la pression atmosphérique $P_0$ et la température $T_0$. On peut par exemple constater que le point de fonctionnement correspondant au second couple $C_3$ est bien situé sur une quatrième courbe de performances, mais qui ne correspond pas à la pression atmosphérique $P_0$ et à la température $T_0$.

Enfin, on calcule à partir de la cinquième valeur $A_{5.2}$ de ce second couple $C_2$ la masse instantanée mesurée $M_m$ de l'aéronef 10 telle que $M_m = A_{5.2} . \sigma$.

Ce procédé d'estimation permet ainsi de déterminer en vol la masse instantanée mesurée $M_m$ de façon précise.

Avantageusement, cette masse instantanée mesurée $M_m$ précise peut être utilisée afin d'optimiser l'utilisation de l'aéronef en déterminant par exemple avec précision la puissance de vol nécessaire pour la réalisation d'une manoeuvre particulière de l'aéronef 10 ou bien la charge utile transportable par l'aéronef 10.

Cette masse instantanée mesurée $M_m$ peut alors être affichée sur un instrument ou bien un écran présent sur le tableau de bord 15 de l'aéronef 10 afin d'en informer le pilote.

De plus, afin d'obtenir une masse instantanée estimée M de l'aéronef fiable et consolidée, on peut comparer la masse instantanée mesurée $M_m$ avec une masse instantanée calculée $M_c$ de l'aéronef 10 obtenue différemment, par exemple à partir de la variation de la quantité de carburant présent dans l'aéronef 10. Cette comparaison de la masse instantanée mesurée $M_m$ et de la masse instantanée calculée $M_c$ peut être faite au cours d'un vol de l'aéronef 10 de façon arithmétique ou bien de façon statistique.

L'aéronef 10 représenté sur la figure 1 comporte deux réservoirs 25,26 dans lesquels est stocké le carburant de l'aéronef 10. La masse instantanée calculée $M_c$ de l'aéronef 10 peut être déterminée à partir de la quantité de carburant restant dans l'aéronef 10 ou bien de la quantité de carburant consommé depuis un instant initial $t_0$ tel que celui du décollage de l'aéronef 10.

On peut alors comparer au cours du vol de l'aéronef 10 de façon arithmétique la masse instantanée mesurée $M_m$ et la masse instantanée calculée $M_c$ en déterminant un premier écart entre cette masse instantanée mesurée $M_m$ et cette masse instantanée calculée $M_c$. La masse instantanée mesurée $M_m$ est alors considérée comme une masse instantanée estimée M fiable et utilisable lorsque ce premier écart est inférieur ou égal à un seuil d'erreur prédéterminé.

En outre, ce premier écart peut permettre d'identifier un changement au niveau de la charge utile de l'aéronef 10 lorsque sa valeur absolue est importante. Ce changement peut correspondre à un déchargement ou bien un chargement d'au moins une partie de cette charge utile.

On peut aussi comparer de façon statistique les valeurs de la masse instantanée mesurée $M_m$ et de la masse instantanée calculée $M_c$ au cours d'un vol de l'aéronef 10 afin de déterminer une masse instantanée estimée $M$ consolidée, fiable et précise.

On peut par exemple, calculer une première moyenne de ces premiers écarts déterminés au cours du vol de l'aéronef 10 depuis l'instant initial to. Ensuite, on peut comparer cette première moyenne avec le seuil d'erreur comme précédemment évoqué ou encore analyser le premier écart type de cette première moyenne.

On peut ainsi comparer l'évolution de la masse instantanée estimée $M$ de l'aéronef 10 grâce aux différentes valeurs de la masse instantanée mesurée $M_m$ et de la masse instantanée calculée $M_c$ au cours d'un vol par une analyse statistique.

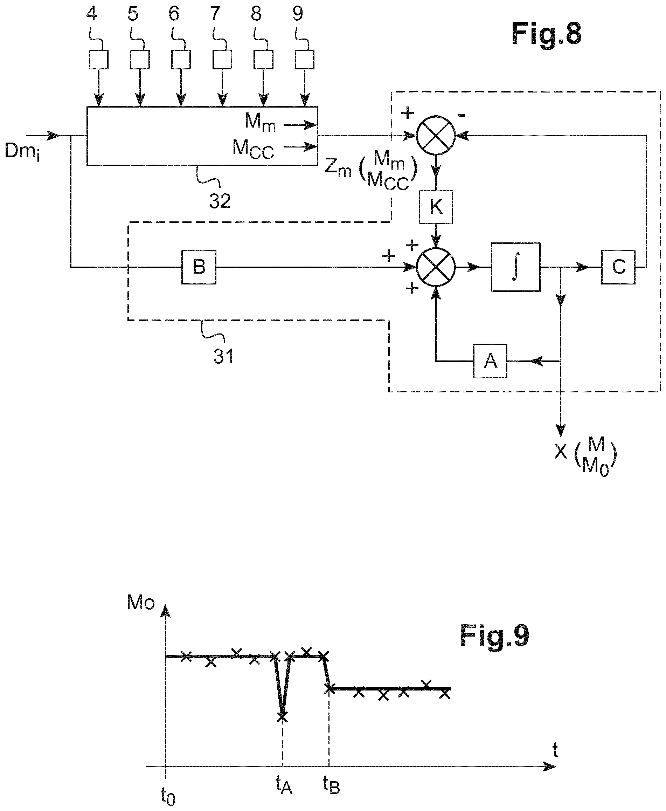

Une telle analyse statistique peut être effectuée par l'intermédiaire d'un filtre de Kalman 31. Un schéma d'une telle architecture est représenté sur la figure 8. On peut ainsi consolider la masse instantanée estimée M en comparant les valeurs de la masse instantanée mesurée $M_m$ et de la masse instantanée calculée $M_c$ par l'intermédiaire par exemple de la masse de carburant consommé $Mcc$ par l'aéronef 10.

On détermine tout d'abord un vecteur de mesure $Z_m \begin{pmatrix} M_m \\ M_{cc} \end{pmatrix}$, la masse instantanée mesurée $M_m$ et la masse de carburant consommé $Mcc$ étant déterminées par l'intermédiaire d'un calculateur 32. Comme précédemment décrit, la masse instantanée mesurée $M_m$ est déterminée à partir des courbes de performances de l'aéronef 10 et la masse de carburant consommé $Mcc$ est déterminée à partir de la consommation de carburant, plus précisément à partir du débit massique instantané $Dm_i$ de ce carburant depuis un instant initial $t_0$. Le calculateur 32 et le filtre de Kalman 31 sont de préférence intégrés au moyen de calcul 2.

On définit ensuite un vecteur d'état $X \begin{pmatrix} M \\ M_0 \end{pmatrix}$ à déterminer, $M$ étant la masse instantanée estimée de l'aéronef 10 et $M_0$ étant sa masse initiale totale à l'instant initial to. La masse initiale totale $M_0$ est donc une constante et sa dérivée est nulle.

Par ailleurs, la masse instantanée estimée $M$ est égale à la masse instantanée mesurée $M_m$ et la masse de carburant consommé $M_{cc}$ est la différence entre la masse initiale totale $M_0$ et la masse instantanée estimée $M$ en prenant en compte des erreurs ou imprécisions de mesures $\Delta_{mes}$, telles que $M = M_m + \Delta_{mes}$ et $M_{cc} = M_0 - M + \Delta_{mes}$.

On peut aussi écrire que la masse instantanée estimée $M$ est égale à la différence entre la masse initiale totale $M_0$ et la masse de carburant consommé $Mcc$ aux erreurs ou imprécisions de mesures $\Delta_{mes}$ près, telles que $M = M_0 - M_{cc} + \Delta_{mes}$. De fait, la dérivée de cette la masse instantanée estimée M est égale à la dérivée la masse de carburant consommé $Mcc$ qui est le débit massique instantané $Dm_i$ du carburant, la masse initiale totale $Mo$ étant une constante. On a donc $\dot{M} = -Dm_i$.

On définit alors une équation d'état $\dot{X} = A.X + B.Dm_i$ et une équation de mesures $Z_m = C.X$ avec les matrices suivantes $A = \begin{bmatrix} 0 & 0 \\ 0 & 0 \end{bmatrix}$, $B = \begin{bmatrix} -1 \\ 0 \end{bmatrix}$ et $C = \begin{bmatrix} 1 & 0 \\ -1 & 1 \end{bmatrix}$, $\dot{X}$ étant la dérivée du vecteur d'état $X$.

On applique enfin l'équation d'état et l'équation de mesure au filtre de Kalman 31 afin de déterminer le vecteur d'état $X$. On obtient ainsi des valeurs de la masse instantanée estimée $M$ et de la masse initiale totale $M_0$ à chaque instant $t$ au cours du vol de l'aéronef 10.

Par ailleurs, la matrice A étant une matrice nulle, la réalisation du filtre de Kalman 31 peut être simplifiée par rapport à la représentation générique de la figure 8 en supprimant la liaison contenant cette matrice A.

En outre, un bruit d'état $Br_{état}$ et un bruit lié aux mesures $Br_{mes}$ sont à prendre en compte dans ces équations qui s'écrivent alors : $\dot{X} = A.X + B.Dm_i + Br_{état}$ et $Z_m = C.X + Br_{mes}$.

La valeur de ce bruit d'état $Br_{état}$ est par exemple définie selon la confiance et/ou la représentativité de cette équation d'état alors que la valeur du bruit lié aux mesures $Br_{mes}$ est définie selon la marge de précision liée aux performances de mesures des capteurs eux-mêmes. Par suite, si la différence entre la masse instantanée mesurée $M_m$ et la masse instantanée estimée $M$ est inférieure ou égale à une marge d'erreur correspondant à ce bruit lié aux mesures $Br_{mes}$ et à ce bruit d'état $Br_{état}$ cette masse instantanée estimée $M$ est considérée comme fiable et utilisable. A contrario, si la différence entre la masse instantanée mesurée $M_m$ et la masse instantanée estimée M est supérieure à cette marge d'erreur, cette masse instantanée estimée $M$ est considérée comme non fiable et non utilisable.

Par ailleurs, la masse initiale totale $M_0$ est normalement une constante qui correspond à la masse totale de l'aéronef 10 à l'instant initial $t_0$. Avantageusement, le procédé selon l'invention permet alors d'identifier des variations de cette masse initiale totale $M_0$ correspondant notamment à un chargement ou bien à un déchargement d'une charge utile de l'aéronef.

Le graphique de la figure 9 représente la variation des valeurs de la masse initiale totale $M_0$ définie par le vecteur d'état $X \begin{pmatrix} M \\ M_0 \end{pmatrix}$ en fonction du temps *t.* On constate une baisse ponctuelle de cette masse initiale totale $M_0$ à l'instant $t_A$ qui correspond en fait à une erreur de mesure ou bien de calcul, telle que l'utilisation d'une série de courbes de performances ne correspondant en fait pas au cas de vol de l'aéronef 10. On constate également une baisse brutale et durable de la masse initiale totale $M_0$ à partir de l'instant $t_B$. Cette baisse de la masse initiale totale $M_0$ étant durable et sensiblement constante après l'instant $t_B$ permet en fait d'identifier un déchargement d'une charge utile de l'aéronef 10.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Procédé d'estimation de la masse instantanée d'un aéronef à voilure tournante (10), ledit aéronef (10) comportant une installation motrice (20) munie d'au moins un moteur (21,22) et d'une boîte de transmission principale de puissance (23), ladite boîte de transmission principale de puissance (23) entrainant en rotation au moins un rotor principal (11) et un rotor anticouple (13), **caractérisé en ce que**, au cours d'un vol,

   - on mesure des caractéristiques de vol dudit aéronef (10), telles que la vitesse horizontale *Vh,* la vitesse verticale *Vz* dudit aéronef (10) et la hauteur *Hz* dudit aéronef (10) par rapport au sol,
   - on mesure des caractéristiques de puissance dudit aéronef (10), telles que le couple $C_R$ et la vitesse réelle de rotation *NR* dudit rotor principal (11) et le couple $C_{RAC}$ et la vitesse réelle de rotation $NR_{AC}$ dudit rotor anticouple (13),
   - on mesure des caractéristiques atmosphériques relatives à l'environnement dudit aéronef (10), telles que la pression atmosphérique $P_0$ et la température $T_0$ de l'air autour dudit aéronef (10),
   - on détermine une puissance de vol *W* dudit aéronef (10),
   - on détermine un point de fonctionnement dudit aéronef (10) sur au moins une série de courbes de performances dudit aéronef (10) en fonction desdites caractéristiques de vol dudit aéronef (10), desdites caractéristiques atmosphériques et de ladite puissance de vol *W* dudit aéronef (10), et
   - on en déduit une masse instantanée mesurée $M_m$ dudit aéronef (10).

2. Procédé selon la revendication 1, **caractérisé en ce que** l'on utilise un algorithme de sélection afin de déterminer chaque série de courbes de performances dudit aéronef (10) à utiliser selon les valeurs de ladite vitesse horizontale *Vh* et ladite vitesse verticale *Vz* dudit aéronef (10).

3. Procédé selon l'une quelconque des revendications 1 à 2, **caractérisé en ce que**, lorsque ledit aéronef (10) est en vol stationnaire, ladite vitesse horizontale *Vh* et ladite vitesse verticale *Vz* étant sensiblement nulles, des caractéristiques fonctionnelles dudit aéronef (10) étant notamment définies par une série de premières courbes de performances selon une première formule
$$\frac{W}{\sigma} \cdot \left(\frac{NR_0}{NR}\right)^3 = k.f_1\left[\frac{M_m}{\sigma} \cdot \left(\frac{NR_0}{NR}\right)^2\right],$$
*W* étant ladite puissance de vol dudit aéronef (10), $\sigma$ étant un coefficient de réduction, *k* étant un coefficient d'influence du sol sur le comportement dudit aéronef (10) en fonction de ladite hauteur *Hz* dudit aéronef (10) par rapport audit sol, $M_m$ étant ladite masse instantanée mesurée dudit aéronef (10), $NR_0$ étant une vitesse de consigne de rotation dudit rotor principal (11), *NR* étant ladite vitesse réelle de rotation dudit rotor principal (11) et $f_1$ étant une première fonction représentée par une série de premières courbes de performances dudit aéronef (10),

- on calcule ledit coefficient de réduction $\sigma$ tel que $\sigma = \left(\dfrac{P_0}{T_0}\right)$,

- on calcule une première valeur $A_1$ telle que

$$A_1 = \frac{W}{\sigma} \cdot \left(\frac{NR_0}{NR}\right)^3,$$

- on détermine, grâce à une première courbe de performances dudit aéronef (10) selon ladite première fonction $f_1$ correspondant aux conditions de vol dudit aéronef (10) et en fonction de ladite première valeur $A_1$, une seconde valeur $A_2$ telle que

$$A_2 = f_1\left[\frac{M_m}{\sigma} \cdot \left(\frac{NR_0}{NR}\right)^2\right] = \frac{\frac{M_m}{\sigma} \cdot \left(\frac{NR_0}{NR}\right)^2}{k},$$

- on détermine ledit coefficient d'influence $k$ selon ladite hauteur $Hz$ dudit aéronef (10) par rapport audit sol, et
- on calcule à partir de ladite seconde valeur $A_2$ ladite masse instantanée mesurée $M_m$ dudit aéronef (10), telle que

$$M_m = k \cdot A_2 \cdot \sigma \cdot \left(\frac{NR}{NR_0}\right)^2.$$

**4.** Procédé selon l'une quelconque des revendications 1 à 2,
**caractérisé en ce que**, lorsque ledit aéronef (10) est en vol ascensionnel, ladite vitesse horizontale $Vh$ et ladite vitesse verticale $Vz$ étant non nulles, des caractéristiques fonctionnelles dudit aéronef (10) étant notamment définies par deux séries de secondes et troisièmes courbes de performances selon respectivement une seconde formule

$$\left(\frac{W}{\sigma}\right)\bigg/\left(\frac{W'}{\sigma}\right)_{Vy} = f_2(Vz)$$

et une troisième formule $\left(\frac{W'}{\sigma}\right)_{Vy} = f_3\left(\frac{M_m}{\sigma}\right)$, $W$ étant ladite puissance de vol dudit aéronef (10), $\sigma$ étant un coefficient de réduction, $M_m$ étant ladite masse instantanée mesurée dudit aéronef (10), $Vz$ étant ladite vitesse verticale dudit aéronef (10), $Vy$ étant la vitesse optimale de montée dudit aéronef (10), $f_2$ et $f_3$ étant respectivement une seconde et une troisième fonctions représentées par deux séries de courbes de performances dudit aéronef (10), un premier rapport $\left(\frac{W}{\sigma}\right)$

étant obtenu pour une vitesse verticale $Vz$ quelconque dudit aéronef (10), ladite la puissance de vol $W$ correspondant à ladite vitesse verticale $Vz$, un second rapport $\left(\frac{W'}{\sigma}\right)_{Vy}$ étant obtenu pour une vitesse $Vh'$ dudit aéronef (10) uniquement horizontale et égale à ladite vitesse optimale de montée $Vy$, une puissance optimale $W'$ correspondant à ladite vitesse horizontale $Vh'$,

- on détermine grâce à une seconde courbe de performances dudit aéronef (10) selon ladite seconde fonction $f_2$ correspondant aux conditions de vol dudit aéronef (10) et en fonction de ladite vitesse verticale $Vz$ dudit aéronef (10) une troisième valeur $A_3$ telle que

$$A_3 = f_2(Vz) = \left(\frac{W}{\sigma}\right)\bigg/\left(\frac{W'}{\sigma}\right)_{Vy},$$

- on calcule ledit coefficient de réduction $\sigma$ tel que $\sigma = \left(\dfrac{P_0}{T_0}\right)$,

- on calcule à partir de ladite troisième valeur $A_3$, de ladite puissance de vol $W$ et dudit coefficient de réduction $\sigma$ une quatrième valeur $A_4$

$$A_4 = \left(\frac{W}{\sigma}\right)\bigg/A_3 = \left[\left(\frac{W'}{\sigma}\right)_{Vy}\right],$$

telle que
- on détermine grâce à une troisième courbe de performances dudit aéronef (10) selon ladite troisième fonction $f_3$ et correspondant aux conditions de vol dudit aéronef (10) et en fonction de ladite quatrième valeur $A_4$ qui est telle que

$$A_4 = \left[\left(\frac{W'}{\sigma}\right)_{Vy}\right] = f_3\left(\frac{M_m}{\sigma}\right),$$

une cinquième valeur $A_5$ telle que $A_5 = \left(\dfrac{M_m}{\sigma}\right)$, et

- on calcule à partir de ladite cinquième valeur $A_5$ ladite masse instantanée mesurée $M_m$ telle que $M_m = A_5 \cdot \sigma$.

**5.** Procédé selon l'une quelconque des revendications 1 à 2,
**caractérisé en ce que**, lorsque ledit aéronef (10) est en vol en palier, ladite vitesse verticale $Vz$ étant sensiblement nulle, les caractéristiques fonctionnelles dudit aéronef (10) étant notamment définies par deux séries de troisièmes et quatrièmes courbes de performances selon une troisième formule

$$\left(\frac{W'}{\sigma}\right)_{Vy} = f_3\left(\frac{M_m}{\sigma}\right)$$ et une quatrième formule

$$\left.\left(\frac{W}{\sigma}\right)\middle/\left(\frac{W'}{\sigma}\right)_{Vy}\right. = f_4\left[\left(\frac{Vh}{Vy}\right)^3, \frac{M_m}{\sigma}\right],$$

$W$ étant ladite puissance de vol dudit aéronef (10), $\sigma$ étant un coefficient de réduction, $M_m$ étant ladite masse instantanée mesurée dudit aéronef (10), $Vh$ étant ladite vitesse horizontale dudit aéronef (10), $Vy$ étant la vitesse optimale de montée dudit aéronef (10), $f_3$ et $f_4$ étant respectivement une troisième et une quatrième fonctions représentées par deux séries de courbes de performances dudit aéronef (10), un premier rapport $\left(\frac{W}{\sigma}\right)$ étant obtenu pour une vitesse horizontale $Vh$ quelconque dudit aéronef, ladite puissance de vol $W$ correspondant à ladite vitesse horizontale $Vh$, un second rapport $\left(\frac{W'}{\sigma}\right)_{Vy}$ étant obtenu pour une vitesse $Vh'$ dudit aéronef (10) uniquement horizontale et égale à ladite vitesse optimale de montée $Vy$, une puissance optimale $W'$ correspondant à ladite vitesse horizontale $Vh'$, on détermine ladite masse instantanée mesurée $M_m$ qui permet de résoudre simultanément les troisième et quatrième formules, selon ladite puissance de vol $W$ et ladite vitesse horizontale $Vh$.

6.  Procédé selon la revendication 5, **caractérisé en ce que**,

    - on calcule une sixième valeur $A_6$ telle que

    $$A_6 = \left(\frac{Vh}{Vy}\right)^3$$ en fonction de ladite vitesse horizontale $Vh$ et de ladite vitesse optimale de montée $Vy$ dudit aéronef (10),
    - on détermine grâce à une série de quatrièmes courbes de performances dudit aéronef (10) selon ladite quatrième fonction $f_4$ et en fonction de ladite sixième valeur $A_6$ des premiers couples formés d'une troisième valeur $A_3$ et d'une cinquième valeur $A_5$ telle que

    $$A_3 = \left.\left(\frac{W}{\sigma}\right)\middle/\left(\frac{W'}{\sigma}\right)_{Vy}\right.$$ et $A_5 = \frac{M_m}{\sigma}$,
    - on calcule ledit coefficient de réduction $\sigma$ tel que $$\sigma = \left(\frac{P_0}{T_0}\right),$$

- on calcule à partir de chaque troisième valeur $A_3$, de ladite puissance de vol $W$ et dudit coefficient de réduction $\sigma$ une quatrième valeur $A_4$

$$A_4 = \left.\left(\frac{W}{\sigma}\right)\middle/A_3\right. = \left[\left(\frac{W'}{\sigma}\right)_{Vy}\right],$$ telle que afin de former des seconds couples formés d'une quatrième valeur $A_4$ et d'une cinquième valeur $A_5$,

- on détermine le second couple formé d'une quatrième valeur $A_4$ et d'une cinquième valeur $A_5$ résolvant ladite troisième formule grâce à une troisième courbe de performances dudit aéronef (10) selon ladite troisième fonction $f_3$ et correspondant aux conditions de vol dudit aéronef (10), et
- on calcule à partir de ladite cinquième valeur $A_5$ dudit second couple résolvant ladite troisième formule ladite masse instantanée mesurée $M_m$ telle que $M_m = A_5.\sigma$.

7.  Procédé selon l'une quelconque des revendications 1 à 6, **caractérisé en ce que**

    - on calcule une masse instantanée calculée $M_c$ qui est déterminée à partir de la variation de la quantité de carburant présent dans ledit aéronef (10),
    - on compare ladite masse instantanée mesurée $M_m$ et ladite masse instantanée calculée $M_c$ afin d'obtenir une masse instantanée estimée $M$ dudit aéronef (10) fiable et consolidée.

8.  Procédé selon la revendication 7, **caractérisé en ce que**, afin de comparer les valeurs de ladite masse instantanée mesurée $M_m$ et de ladite masse instantanée calculée $M_c$ au cours d'un vol dudit aéronef (10) de façon arithmétique,

    - on détermine un premier écart entre ladite masse instantanée mesurée $M_m$ et ladite masse instantanée calculée $M_c$,
    - si ledit premier écart est inférieur ou égal à un seuil d'erreur, ladite masse instantanée mesurée $M_m$ est considérée comme une masse instantanée estimée $M$ fiable et utilisable et,
    - si ledit premier écart est supérieur audit seuil d'erreur, ladite masse instantanée mesurée $M_m$ est considérée comme une masse instantanée estimée $M$ non utilisable et on émet une alerte.

9.  Procédé selon la revendication 7, **caractérisé en ce que** l'on compare les valeurs de ladite masse instantanée mesurée $M_m$ et de ladite masse instantanée calculée $M_c$ au cours d'un vol dudit aéronef (10) de façon statistique.

**10.** Procédé selon la revendication 9, **caractérisé en ce que**

- on détermine un premier écart entre ladite masse instantanée mesurée $M_m$ et ladite masse instantanée calculée $M_c$,
- on calcule une première moyenne desdits premiers écarts déterminés entre un instant $t$ et un instant initial $t_0$,
- si ladite première moyenne est inférieure ou égale à un seuil d'erreur, ladite masse instantanée mesurée $M_m$ est considérée comme une masse instantanée estimée $M$ fiable et utilisable et,
- si ladite première moyenne est supérieure audit seuil d'erreur, ladite masse instantanée mesurée $M_m$ est considérée comme une masse instantanée estimée M non utilisable et on émet une alerte.

**11.** Procédé selon la revendication 9, **caractérisé en ce que**,

- on détermine un premier écart entre ladite masse instantanée mesurée $M_m$ et ladite masse instantanée calculée $M_c$,
- on calcule une première moyenne desdits premiers écarts déterminés entre un instant $t$ et un instant initial $t_0$, et un premier écart type associé,
- on analyse ladite première moyenne et ledit premier écart type associé afin de déterminer si ladite masse instantanée mesurée $M_m$ est considérée comme une masse instantanée estimée $M$ fiable et utilisable.

**12.** Procédé selon la revendication 9, **caractérisé en ce que** on compare les valeurs de ladite masse instantanée mesurée $M_m$ et de ladite masse instantanée calculée $M_c$ au cours d'un vol dudit aéronef (10) par l'intermédiaire d'au moins un filtre de Kalman (31).

**13.** Procédé selon l'une quelconque des revendications 7 à 12, **caractérisé en ce que**

- on mesure un débit volumétrique instantanée $Dv_i$ de consommation d'un carburant alimentant ladite installation motrice (20),
- on mesure la température instantanée $T_i$ dudit carburant,
- on calcule un débit massique instantané $Dm_i$ dudit carburant,
- on détermine une masse $M_{CC}$ dudit carburant consommé depuis un instant initial $t_0$ par intégration dudit débit massique instantané $Dm_i$ dudit carburant depuis ledit instant initial $t_0$, et
- on calcule ladite masse instantanée calculée

$M_c$ qui est égale à la masse initiale totale $Mo$ dudit aéronef (10) audit instant initial $t_0$ à laquelle est soustraite ladite masse $M_{CC}$ dudit carburant consommé.

**14.** Procédé selon l'une quelconque des revendications 7 à 12, **caractérisé en ce que**, ledit aéronef (10) comportant au moins un réservoir (25,26) dans lequel est stocké ledit carburant,

- on mesure un volume $V_{CR}$ dudit carburant restant dans l'ensemble desdits réservoirs (25,26),
- on mesure la température instantanée $T_i$ dudit carburant,
- on calcule une masse $M_{CR}$ dudit carburant restant dans ledit ensemble desdits réservoirs (25,26),
- on détermine une masse $Mcc$ dudit carburant consommé depuis un instant initial $to$ en soustrayant de ladite masse $M_{CRt0}$ dudit carburant restant dans ledit ensemble desdits réservoirs (25,26) audit instant initial $to$ ladite masse $M_{CRt}$ dudit carburant restant à l'instant $t$, et
- on calcule ladite masse instantanée calculée $M_c$ qui est égale à la masse initiale totale $M_0$ dudit aéronef (10) audit instant initial $t_0$ à laquelle est soustraite ladite masse $M_{CC}$ dudit carburant consommé.

**15.** Procédé selon l'une quelconque des revendications 7 à 12, **caractérisé en ce que**, ledit aéronef (10) comportant au moins un réservoir (25,26) dans lequel est stocké ledit carburant,

- on mesure un volume $V_{CR}$ dudit carburant restant dans l'ensemble desdits réservoirs (25,26),
- on mesure la température instantanée $T_i$ dudit carburant,
- on calcule une masse $M_{CR}$ dudit carburant restant dans ledit ensemble desdits réservoirs (25,26),
- on calcule ladite masse instantanée calculée $M_c$ qui est égale à la masse initiale $M_1$ hors carburant dudit aéronef (10) audit instant initial $t_0$ à laquelle est ajoutée ladite masse $M_{CR}$ dudit carburant restant.

**16.** Procédé selon la revendication 13, **caractérisé en ce que**, pour comparer les valeurs de ladite masse instantanée mesurée $M_m$ et de ladite masse instantanée calculée $M_c$ au cours d'un vol dudit aéronef (10) de façon statistique par l'intermédiaire d'un filtre de Kalman (31),

- on détermine un vecteur de mesure $Z_m$ tel que

$$Z_m \begin{pmatrix} M_m \\ M_{CC} \end{pmatrix},$$ $M_m$ étant ladite masse instantanée mesurée et $M_{CC}$ étant ladite masse de carburant consommé dudit aéronef (10),

- on définit un vecteur d'état $X$ à déterminer tel que $$X \begin{pmatrix} M \\ M_0 \end{pmatrix},$$ $M$ étant une masse instantanée estimée et $M_0$ étant la masse initiale totale dudit aéronef (10),

- on définit une équation d'état $\dot{X} = A.X + B.Dm_i$, avec $$A = \begin{bmatrix} 0 & 0 \\ 0 & 0 \end{bmatrix}$$ et $$B = \begin{bmatrix} -1 \\ 0 \end{bmatrix},$$ $Dm_i$ étant ledit débit massique instantané dudit carburant égal à la dérivée de ladite masse de carburant consommé $M_{CC}$ dudit aéronef (10), $\dot{X}$ étant la dérivée dudit vecteur d'état $X$,

- on définit une équation de mesures $Z_m = C.X,$ avec $$C = \begin{bmatrix} 1 & 0 \\ -1 & 1 \end{bmatrix},$$

- on applique ladite équation d'état et ladite équation de mesure à un filtre de Kalman (31) afin de déterminer ledit vecteur d'état $X$, et par suite ladite masse instantanée estimée $M$ et ladite masse initiale totale $M_0$ dudit aéronef (10).

**17.** Procédé selon l'une quelconque des revendications 1 à 16,
**caractérisé en ce que** ladite puissance de vol $W$ est égale à la somme de la puissance consommée par ledit rotor principal (11) et de la puissance consommée par ledit rotor anticouple (13).

**18.** Procédé selon l'une quelconque des revendications 1 à 16,
**caractérisé en ce que** ladite puissance de vol $W$ est égale à une puissance motrice fournie par ladite installation motrice (20) à laquelle est soustraite une puissance accessoire $W_{acc}$ nécessaire pour alimenter des équipements dudit aéronef (10).

**19.** Dispositif (1) d'estimation de la masse instantanée d'un aéronef à voilure tournante (10), ledit aéronef (10) comportant une installation motrice (20) munie d'au moins un moteur (21,22) et d'une boîte de transmission principale de puissance (23), ainsi qu'une pluralité de capteurs (13-19) fournissant des mesures sur le fonctionnement et l'environnement dudit aéronef (10), ladite boîte de transmission principale de puissance (23) entrainant en rotation au moins un rotor principal (11) et un rotor anticouple (13),
**caractérisé en ce que** ledit dispositif d'estimation de la masse instantanée (1) comporte au moins un moyen de calcul (2) et au moins une mémoire (3), une mémoire (3) stockant des séries de courbes de performances dudit aéronef (10) et des instructions de calculs, ledit moyen de calcul (2) recevant lesdites mesures desdits capteurs (13-19) et appliquant lesdites instructions de calculs afin de mettre en oeuvre le procédé d'estimation de la masse instantanée d'un aéronef à voilure tournante (10) selon l'une quelconque des revendications 1 à 18.

**20.** Dispositif (1) selon la revendication 19,
**caractérisé en ce que** ledit dispositif d'estimation de la masse instantanée (1) comporte au moins un filtre de Kalman (31) afin de comparer l'évolution de ladite masse instantanée mesurée $M_m$ et ladite masse instantanée calculée $M_c$ dudit aéronef (10) au cours d'un vol et de déterminer une masse instantanée estimée $M$.

## Patentansprüche

**1.** Verfahren zum Schätzen der momentanen Masse eines Drehflügelflugzeugs (10), wobei das Flugzeug (10) ein Triebwerk (20) umfasst, das mit mindestens einem Motor (21, 22) und einem Hauptleistungsgetriebe (23) versehen ist, wobei das Hauptleistungsgetriebe (23) mindestens einen Hauptrotor (11) und einen Heckrotor (13) in Rotation versetzt,
**dadurch gekennzeichnet, dass** während eines Fluges

- Flugeigenschaften des Flugzeugs (10) gemessen werden, wie beispielsweise die horizontale Geschwindigkeit Vh, die vertikale Geschwindigkeit Vz des Flugzeugs (10) und die Höhe Hz des Flugzeugs (10) über dem Boden,
- Leistungsmerkmale des Flugzeugs (10) gemessen werden, wie beispielsweise das Drehmoment $C_R$ und die tatsächliche Drehzahl NR des Hauptrotors (11) und das Drehmoment $C_{RAC}$ und die tatsächliche Drehzahl $NR_{AC}$ des Heckrotors (13),
- atmosphärische Eigenschaften, die sich auf die Umgebung des Flugzeugs (10) beziehen, wie Atmosphärendruck $P_0$ und Lufttemperatur $T_0$ um das Flugzeug (10), gemessen werden,
- eine Flugleistung W des Flugzeugs (10) bestimmt wird,
- ein Betriebspunkt des Flugzeugs (10) auf mindestens einer Reihe von Leistungskurven des Flugzeugs (10) basierend auf den Flugeigenschaften des Flugzeugs (10), den atmosphärischen Eigenschaften und der Flugleistung W des Flugzeugs (10) bestimmt wird, und
- daraus eine momentane gemessene Masse $M_m$ des Flugzeugs (10) abgeleitet wird.

**2.** Verfahren nach Anspruch 1,

**dadurch gekennzeichnet, dass** ein Auswahlalgorithmus verwendet wird, um jede Reihe von zu verwendenden Leistungskurven des Flugzeugs (10) anhand der Werte der horizontalen Geschwindigkeit Vh und der vertikalen Geschwindigkeit Vz des Flugzeugs (10) zu bestimmen.

3. Verfahren nach einem der Ansprüche 1 bis 2, **dadurch gekennzeichnet, dass**, wenn sich das Flugzeug (10) im Schwebeflug befindet, und die horizontale Geschwindigkeit Vh und die vertikale Geschwindigkeit Vz im Wesentlichen Null sind, die Betriebseigenschaften des Flugzeugs (10) insbesondere durch eine Reihe von ersten Leistungskurven gemäß einer ersten Formel

$$\frac{W}{\sigma} \cdot \left(\frac{NR_0}{NR}\right)^3 = k \cdot f_1\left[\frac{M_m}{\sigma} \cdot \left(\frac{NR_0}{NR}\right)^2\right]$$

definiert sind, wobei W die Flugleistung des Flugzeugs (10), $\sigma$ ein Reduktionskoeffizient, k ein Koeffizient des Einflusses des Bodens auf das Verhalten des Flugzeugs (10) in Abhängigkeit von der Höhe Hz des Flugzeugs (10) über dem Boden, $M_m$ die momentane gemessene Masse des Flugzeugs (10), $NR_0$ eine gewünschte Drehzahl des Hauptrotors (11), NR die tatsächliche Drehzahl des Hauptrotors (11) und $f_1$ eine erste Funktion, dargestellt durch eine Reihe von ersten Leistungskurven des Flugzeugs (10), ist,

- der Reduktionskoeffizient $\sigma$ so berechnet wird, dass

$$\sigma = \left(\frac{P_0}{T_0}\right),$$

- ein erster Wert $A_1$ so berechnet wird, dass

$$A_1 = \frac{W}{\sigma} \cdot \left(\frac{NR_0}{NR}\right)^3,$$

- mit Hilfe einer ersten Leistungskurve des Flugzeugs (10) gemäß der ersten Funktion $f_1$, die den Flugbedingungen des Flugzeugs (10) entspricht, und abhängig vom ersten Wert $A_1$ ein zweiter Wert $A_2$ derart bestimmt wird, dass

$$A_2 = f_1\left[\frac{M_m}{\sigma} \cdot \left(\frac{NR_0}{NR}\right)^2\right] = \frac{\frac{M_m}{\sigma} \cdot \left(\frac{NR_0}{NR}\right)^2}{k},$$

- der Einflussfaktor k gemäß der Höhe Hz des Flugzeugs (10) über dem Boden bestimmt wird und

- der zweite Wert $A_2$ verwendet wird, um die gemessene momentane Masse $M_m$ des Flugzeugs (10) so zu berechnen, dass

$$M_m = k \cdot A_2 \cdot \sigma \cdot \left(\frac{NR}{NR_0}\right)^2.$$

4. Verfahren nach einem der Ansprüche 1 bis 2, **dadurch gekennzeichnet, dass**, wenn sich das Flugzeug (10) im Steigflug befindet und die horizontale Geschwindigkeit Vh und die vertikale Geschwindigkeit Vz ungleich Null sind, die Betriebseigenschaften des Flugzeugs (10) insbesondere durch zwei Reihen von zweiten und dritten Leistungskurven gemäß einer zweiten Formel

$$\left(\frac{W}{\sigma}\right) \Big/ \left(\frac{W'}{\sigma}\right)_{Vy} = f_2(Vz)$$

und einer dritten Formel

$$\left(\frac{W'}{\sigma}\right)_{Vy} = f_3\left(\frac{M_m}{\sigma}\right).$$

bestimmt werden, wobei W die Flugleistung des Flugzeugs (10), $\sigma$ ein Reduktionskoeffizient, $M_m$ die momentane gemessene Masse des Flugzeugs (10), Vz die vertikale Geschwindigkeit des Flugzeugs (10), Vy die optimale Steigrate des Flugzeugs (10) und $f_2$ und $f_3$ jeweils eine zweite und dritte Funktion sind, die durch zwei Sätze von Leistungskurven des Flugzeugs (10) dargestellt sind, wobei ein erstes Verhältnis

$$\left(\frac{W}{\sigma}\right)$$

für eine beliebige vertikale Geschwindigkeit Vz des Flugzeugs (10) erhalten wird, wobei die Flugleistung W der vertikalen Geschwindigkeit Vz entspricht, ein zweites Verhältnis

$$\left(\frac{W'}{\sigma}\right)_{Vy}$$

für eine rein horizontale Geschwindigkeit Vh' des Flugzeugs (10) erhalten wird, die gleich der optimalen Steiggeschwindigkeit Vy ist, wobei eine optimale Leistung W' der horizontalen Geschwindigkeit Vh' entspricht,

- mit Hilfe einer zweiten Leistungskurve des Flugzeugs (10) gemäß der zweiten Funktion $f_2$, die den Flugbedingungen des Flugzeugs (10) entspricht, und abhängig von der vertikalen Geschwindigkeit Vz des Flugzeugs (10) ein dritter Wert $A_3$ so bestimmt wird, dass

$$A_3 = f_2(Vz) = \left(\frac{W}{\sigma}\right) \Big/ \left(\frac{W'}{\sigma}\right)_{Vy} ,$$

- der Reduktionskoeffizient $\sigma$ so berechnet wird, dass

$$\sigma = \left(\frac{P_0}{T_0}\right),$$

- anhand des dritten Werts $A_3$, der Flugleistung W und des Reduktionskoeffizienten ein vierter Wert $A_4$ so berechnet wird, dass

$$A_4 = \left(\frac{W}{\sigma}\right) \Big/ A_3 = \left[\left(\frac{W'}{\sigma}\right)_{Vy}\right],$$

- mit Hilfe einer dritten Leistungskurve des Flugzeugs (10) gemäß der zweiten Funktion $f_3$, die den Flugbedingungen des Flugzeugs (10) entspricht, und abhängig von dem vierten Wert, für den

$$A_4 = \left[\left(\frac{W'}{\sigma}\right)_{Vy}\right] = f_3\left(\frac{M_m}{\sigma}\right)$$

gilt, ein fünfter Wert A5 so berechnet wird, dass

$$A_5 = \left(\frac{M_m}{\sigma}\right),$$

und
- anhand des fünften Werts $A_5$ die gemessene momentane Masse $M_m$ so berechnet wird, dass

$$M_m = A_5.\sigma.$$

5. Verfahren nach einem der Ansprüche 1 bis 2, **dadurch gekennzeichnet, dass**, wenn sich das Flugzeug (10) im Horizontalflug befindet und die vertikale Geschwindigkeit Vz im Wesentlichen Null ist, die Betriebseigenschaften des Flugzeugs (10) insbesondere durch zwei Reihen von dritten und vierten Leistungskurven gemäß einer dritten Formel

$$\left(\frac{W}{\sigma}\right)_{Vy} = f_3\left(\frac{M_m}{\sigma}\right)$$

und einer vierten Formel

$$\left(\frac{W}{\sigma}\right) \Big/ \left(\frac{W'}{\sigma}\right)_{Vy} = f_4\left[\left(\frac{Vh}{Vy}\right)^3, \frac{M_m}{\sigma}\right]$$

bestimmt werden, wobei W die Flugleistung des Flugzeugs (10), $\sigma$ ein Reduktionskoeffizient, $M_m$ die momentane gemessene Masse des Flugzeugs (10), Vh die horizontale Geschwindigkeit des Flugzeugs (10), Vy die optimale Steigrate des Flugzeugs (10) und $f_3$ und $f_4$ jeweils eine dritte und eine vierte Funktion sind, die durch zwei Reihen von Leistungskurven des Flugzeugs (10) dargestellt werden, wobei ein erstes Verhältnis

$$\left(\frac{W}{\sigma}\right)$$

für eine beliebige horizontale Geschwindigkeit Vh des Flugzeugs (10) erhalten wird, wobei die Flugleistung W der horizontalen Geschwindigkeit Vh entspricht, ein zweites Verhältnis

$$\left(\frac{W'}{\sigma}\right)_{Vy}$$

für eine rein horizontale Geschwindigkeit Vh' des Flugzeugs (10) gleich der optimalen Steiggeschwindigkeit Vy erhalten wird, wobei eine optimale Leistung W' der horizontalen Geschwindigkeit Vh' entspricht, wobei diejenige gemessene momentane Masse $M_m$ bestimmt wird, die es ermöglicht, die dritte und vierte Formel gleichzeitig für die Flugleistung W und die horizontale Geschwindigkeit Vh zu lösen.

6. Verfahren nach Anspruch 5, **dadurch gekennzeichnet, dass**,

- ein sechster Wert $A_6$ als Funktion der horizontalen Geschwindigkeit Vh und der optimalen Steiggeschwindigkeit Vy des Flugzeugs (10) so berechnet wird, dass

$$A_6 = \left(\frac{Vh}{Vy}\right)^3,$$

- mit Hilfe einer Reihe von vierten Leistungskurven des Flugzeugs (10) gemäß der vierten Funktion $f_4$, die den Flugbedingungen des Flugzeugs (10) entspricht, und abhängig von dem sechsten Wert $A_6$ erste Paare aus einem dritten Wert $A_3$ und einem fünften Wert $A_5$ so bestimmt werden, dass

$$A_3 = \left(\frac{w}{\sigma}\right) \Big/ \left(\frac{w\prime}{\sigma}\right)_{Vy}$$

und

$$A_5 = \frac{M_m}{\sigma},$$

- der Reduktionskoeffizient $\sigma$ so berechnet wird, dass

$$\sigma = \left(\frac{P_0}{T_0}\right),$$

- anhand des dritten Werts $A_3$, der Flugleistung W und des Reduktionskoeffizienten ein vierter Wert $A_4$ so berechnet wird, dass

$$A_4 = \left(\frac{w}{\sigma}\right) \Big/ A_3 = \left[\left(\frac{w\prime}{\sigma}\right)_{Vy}\right],$$

um zweite Paare aus einem vierten Wert $A_4$ und einem fünften Wert $A_5$ zu bilden,
- das zweite Paar aus einem vierten Wert $A_4$ und einen fünften Wert $A_5$, das die dritte Formel löst, mittels einer dritten Leistungskurve des Flugzeugs (10) gemäß der dritten Funktion $f_3$ entsprechend den Flugbedingungen des Flugzeugs (10) bestimmt wird, und
- anhand des fünften Werts $A_5$ des die dritte Formel lösenden zweiten Paares die gemessene momentane Masse $M_m$ so berechnet wird, dass

$$M_m = A_5 \cdot \sigma.$$

**7.** Verfahren nach einem der Ansprüche 1 bis 6,

**dadurch gekennzeichnet, dass**
eine berechnete momentane Masse $M_c$ berechnet wird, die aus der Änderung der in dem Flugzeug (10) vorhandenen Kraftstoffmenge bestimmt wird,

die gemessene momentane Masse $M_m$ mit der berechneten momentanen Masse $M_c$ verglichen wird, um eine zuverlässige und konsolidierte geschätzte momentane Masse M des Flugzeugs (10) zu erhalten.

**8.** Verfahren nach Anspruch 7,
**dadurch gekennzeichnet, dass**, um die Werte der gemessenen momentanen Masse $M_m$ und der berechneten momentanen Masse $M_c$ während eines Fluges des Flugzeugs (10) arithmetisch zu vergleichen,

- eine erste Abweichung zwischen der gemessenen momentanen Masse $M_m$ und der berechneten momentanen Masse $M_c$ bestimmt wird,
- wenn die erste Abweichung kleiner oder gleich einem Fehlerschwellenwert ist, die gemessene momentane Masse $M_m$ als eine zuverlässige und verwendbare geschätzte momentane Masse M betrachtet wird,
- wenn die erste Abweichung größer als die Fehlerschwelle ist, die gemessene momentane Masse $M_m$ als eine nicht verwendbare geschätzte momentane Masse M betrachtet wird und eine Warnung ausgegeben wird.

**9.** Verfahren nach Anspruch 7,
**dadurch gekennzeichnet, dass** die Werte der gemessenen momentanen Masse $M_m$ und der berechneten momentanen Masse $M_c$ während eines Fluges des Flugzeugs (10) auf statistische Weise verglichen werden.

**10.** Verfahren nach Anspruch 9,
**dadurch gekennzeichnet, dass**

- eine erste Abweichung zwischen der gemessenen momentanen Masse $M_m$ und der berechneten momentanen Masse $M_c$ bestimmt wird,
- ein erster Mittelwert der ersten bestimmten Abweichungen zwischen einem Zeitpunkt t und einem Anfangszeitpunkt $t_0$ berechnet wird,
- wenn der erste Mittelwert kleiner oder gleich einem Fehlerschwellenwert ist, die gemessene momentane Masse $M_m$ als eine zuverlässige und verwendbare geschätzte momentane Masse M betrachtet wird,
- wenn der erste Mittelwert größer als der Fehlerschwellenwert ist, die gemessene momentane Masse Mm als eine nicht verwendbare geschätzte momentane Masse M betrachtet und eine Warnung ausgegeben wird.

**11.** Verfahren nach Anspruch 9,
**dadurch gekennzeichnet, dass**,

- eine erste Abweichung zwischen der gemes-

senen momentanen Masse $M_m$ und der berechneten momentanen Masse $M_c$ bestimmt wird,
- ein erster Mittelwert der ersten bestimmten Abweichungen zwischen einem Zeitpunkt t und einem Anfangszeitpunkt $t_0$ und eine zugehörige erste Standardabweichung berechnet werden,
- der erste Mittelwert und die zugehörige erste Standardabweichung analysiert werden, um zu bestimmen, ob die gemessene momentane Masse $M_m$ als eine zuverlässige und verwendbare geschätzte momentane Masse M betrachtet wird.

**12.** Verfahren nach Anspruch 9,
**dadurch gekennzeichnet, dass** die Werte der gemessenen momentanen Masse $M_m$ und der berechneten momentanen Masse $M_c$ während eines Fluges des Flugzeugs (10) durch mindestens einen Kalman-Filter (31) verglichen werden.

**13.** Verfahren nach einem der Ansprüche 7 bis 12,
**dadurch gekennzeichnet, dass**

- ein momentaner Volumenstrom $D_{Vi}$ des Verbrauchs eines das Triebwerk (20) versorgenden Kraftstoffs gemessen wird, die momentane Temperatur Ti des Kraftstoffs gemessen wird,
- ein momentaner Massenstrom $Dm_i$ des Kraftstoffs berechnet wird,
- eine Masse Mcc des seit einer Anfangszeit to verbrauchten Kraftstoffs durch Integrieren des momentanen Massenstroms $Dm_i$ seit der Anfangszeit $t_0$ bestimmt wird; und
- die berechnete momentane Masse $M_c$ berechnet wird, die gleich der anfänglichen Gesamtmasse $M_0$ des Flugzeugs (10) zu dem Anfangszeitpunkt $t_0$ ist, vermindert um die Masse Mcc des verbrauchten Kraftstoffs.

**14.** Verfahren nach einem der Ansprüche 7 bis 12,
**dadurch gekennzeichnet, dass** das Flugzeug (10) mindestens einen Tank (25, 26) aufweist, in dem der Kraftstoff gelagert ist,

- ein Volumen $V_{CR}$ des in der Gesamtheit der Tanks (25, 26) vorhandenen Kraftstoffs gemessen wird,
- die momentane Temperatur Ti des Kraftstoffs gemessen wird,
- eine Masse $M_{CR}$ des in dem Satz von Tanks (25, 26) vorhandenen Kraftstoffs berechnet wird,
- eine Masse Mcc des seit einer Anfangszeit $t_0$ verbrauchten Kraftstoffs bestimmt wird, indem von der Masse $M_{CRt0}$ des Kraftstoffs, der in der Gesamtheit der Tanks (25, 26) zu der Anfangszeit to vorhanden ist, die Masse $M_{CRt}$ des zum Zeitpunkt t vorhandenen Kraftstoffs abgezogen wird, und
- die berechnete momentane Masse $M_c$ berechnet wird, die gleich der Gesamt-Anfangsmasse $M_0$ des Flugzeugs (10) zu dem Anfangszeitpunkt t0 ist, vermindert um die Masse Mcc des verbrauchten Kraftstoffs.

**15.** Verfahren nach einem der Ansprüche 7 bis 12,
**dadurch gekennzeichnet, dass** das Flugzeug (10) mindestens einen Tank (25, 26) aufweist, in dem der Kraftstoff gelagert ist,

- ein Volumen $V_{CR}$ des in der Gesamtheit der Tanks (25, 26) vorhandenen Kraftstoffs gemessen wird,
- die momentane Temperatur Ti des Kraftstoffs gemessen wird,
- eine Masse $M_{CR}$ des in der Gesamtheit der Tanks (25, 26) vorhandenen Kraftstoffs berechnet wird,
- die berechnete momentane Masse $M_c$ berechnet wird, die gleich der Anfangsmasse $M_1$ ohne Kraftstoff des Flugzeugs (10) zu dem Anfangszeitpunkt t0 ist, vermehrt um die Masse $M_{CR}$ des vorhandenen Kraftstoffs.

**16.** Verfahren nach Anspruch 13,
**dadurch gekennzeichnet, dass** zum Vergleichen der Werte der gemessenen momentanen Masse $M_m$ und der berechneten momentanen Masse $M_c$ während eines Fluges des Flugzeugs (10) auf statistische Weise durch einen Kaiman-Filter (31)

- ein Messvektor Zm so bestimmt wird, dass

$$Z_m \binom{M_m}{M_{CC}},$$

wobei $M_m$ die momentane gemessene Masse und Mcc die Masse des von dem Flugzeug (10) verbrauchten Kraftstoffs ist,
- ein zu bestimmender Zustandsvektor X so definiert wird, dass

$$X \binom{M}{M_0},$$

wobei M eine geschätzte momentane Masse und $M_0$ die anfängliche Gesamtmasse des Flugzeugs (10) ist,
- eine Zustandsgleichung

$$\dot{X} = A.X + B.Dm_i$$

definiert wird, wobei

$$A = \begin{bmatrix} 0 & 0 \\ 0 & 0 \end{bmatrix}$$

und

$$B = \begin{bmatrix} -1 \\ 0 \end{bmatrix},$$

wobei $Dm_i$ der momentane Massenstrom des Kraftstoffs ist, der der Ableitung der Masse des verbrauchten Kraftstoffs Mcc des Flugzeugs (10) entspricht, wobei X die Ableitung des Zustandsvektors X ist,
- eine Messgleichung $Z_m = C.X$ definiert wird,

mit $C = \begin{bmatrix} 1 & 0 \\ -1 & 1 \end{bmatrix}$,

- die Zustandsgleichung und die Messgleichung auf einen Kaiman-Filter (31) angewendet werden, um den Zustandsvektor X und in der Folge die geschätzte momentane Masse M und die anfängliche Gesamtmasse $M_0$ des Flugzeugs (10) zu bestimmen.

17. Verfahren nach einem der Ansprüche 1 bis 16, **dadurch gekennzeichnet, dass** die Flugleistung W gleich der Summe aus der vom Hauptrotor (11) aufgenommenen Leistung und der vom Heckrotor (13) aufgenommenen Leistung ist.

18. Verfahren nach einem der Ansprüche 1 bis 16, **dadurch gekennzeichnet, dass** die Flugleistung W gleich einer von dem Triebwerk (20) gelieferten Antriebsleistung ist, vermindert um eine Zusatzleistung $W_{acc}$, die zur Versorgung der Ausrüstung des Flugzeugs (10) erforderlich ist.

19. Vorrichtung (1) zum Schätzen der momentanen Masse eines Drehflügelflugzeugs (10), wobei das Flugzeug (10) ein Triebwerk (20), das mit mindestens einem Motor (21, 22) und einem Hauptleistungsgetriebe (23) ausgestattet ist, sowie eine Mehrzahl von Sensoren (13-19) umfasst, die Messwerte über den Betrieb und die Umgebung des Flugzeugs (10) liefern, wobei das Hauptleistungsgetriebe (23) mindestens einen Hauptrotor (11) und einen Heckrotor (13) drehantreibt,
**dadurch gekennzeichnet, dass** die Vorrichtung (1) zum Schätzen der momentanen Masse mindestens ein Rechenmittel (2) und mindestens einen Speicher (3) umfasst, wobei ein Speicher (3) eine Reihe von Leistungskurven des Flugzeugs (10) und Rechenanweisungen speichert, wobei das Rechenmittel (2) die Messwerte der Sensoren (13-19) empfängt und die Rechenanweisungen anwendet, um das Verfahren zum Schätzen der momentanen Masse eines Drehflügelflugzeugs (10) nach einem der Ansprüche 1 bis 18 umzusetzen.

20. Vorrichtung (1) nach Anspruch 19, **dadurch gekennzeichnet, dass** die Vorrichtung (1) zum Schätzen der momentanen Masse mindestens einen Kalman-Filter (31) zum Vergleichen der Entwicklung der gemessenen momentanen Masse $M_m$ und der berechneten momentanen Masse $M_c$ des Flugzeugs (10) während eines Fluges und zum Bestimmen einer geschätzten momentanen Masse M umfasst.

**Claims**

1. Method for estimating the instantaneous mass of a rotary-wing aircraft (10), said aircraft (10) comprising a powerplant (20) provided with at least one engine (21, 22) and a main power transmission gearbox (23), said main power transmission gearbox (23) rotating at least one main rotor (11) and one anti-toque rotor (13),
**characterised in that**, during a flight,

- flight characteristics of said aircraft (10), such as the horizontal speed $Vh$, the vertical speed $Vz$ of said aircraft (10) and the height $Hz$ of said aircraft (10) with respect to the ground, are measured,
- power characteristics of said aircraft (10), such as the torque $C_R$ and the actual speed of rotation $NR$ of said main rotor (11) and the torque $C_{RAC}$ and the actual speed of rotation $NR_{AC}$ of said anti-torque rotor (13), are measured,
- atmospheric characteristics relating to the environment of said aircraft (10), such as the atmospheric pressure $P_0$ and the temperature $T_0$ of the air around said aircraft (10), are measured,
- a flight power $W$ of said aircraft (10) is determined,
- an operating point of said aircraft (10) is determined over at least one series of performance curves of said aircraft (10) on the basis of said flight characteristics of said aircraft (10), said atmospheric characteristics and said flight power $W$ of said aircraft (10), and
- a measured instantaneous mass $M_m$ of said aircraft (10) is deduced therefrom.

2. Method according to claim 1, **characterised in that** a selection algorithm is used to determine each series of performance curves of said aircraft (10) to be used according to the values of said horizontal speed Vh and said vertical speed $Vz$ of said aircraft (10).

**3.** Method according to either claim 1 or claim 2, **characterised in that**, when said aircraft (10) is in hover flight, said horizontal speed *Vh* and said vertical speed *Vz* being substantially zero, operational characteristics of said aircraft (10) being defined in particular by a series of first performance curves according to a first formula

$$\frac{W}{\sigma} \cdot \left(\frac{NR_0}{NR}\right)^3 = k.f_1\left[\frac{M_m}{\sigma}\cdot\left(\frac{NR_0}{NR}\right)^2\right]$$

, *W* being said flight power of said aircraft (10), $\sigma$ being a reduction coefficient, k being a coefficient of the influence of the ground on the behaviour of said aircraft (10) on the basis of said height *Hz* of said aircraft (10) with respect to said ground, $M_m$ being said measured instantaneous mass of said aircraft (10), $NR_0$ being a set speed of rotation of said main rotor (11), *NR* being said actual speed of rotation of said main rotor (11), and $f_1$ being a first function represented by a series of first performance curves of said aircraft (10),

- said reduction coefficient $\sigma$ is calculated such that $\sigma = \left(\frac{P_0}{T_0}\right)$,

- a first value $A_1$ is calculated such that

$$A_1 = \frac{W}{\sigma}\cdot\left(\frac{NR_0}{NR}\right)^3,$$

- a second value $A_2$ is determined by virtue of a first performance curve of said aircraft (10) according to said first function $f_1$ corresponding to the flight conditions of said aircraft (10) and on the basis of said first value $A_1$ such that

$$A_2 = f_1\left[\frac{M_m}{\sigma}\cdot\left(\frac{NR_0}{NR}\right)^2\right] = \frac{\frac{M_m}{\sigma}\left(\frac{NR_0}{NR}\right)^2}{k},$$

- said influence coefficient *k* is determined according to said height *Hz* of said aircraft (10) with respect to said ground, and
- said measured instantaneous mass $M_m$ of said aircraft (10) is calculated from said second value $A_2$ such that

$$M_m = k.A_2.\sigma.\left(\frac{NR}{NR_0}\right)^2.$$

**4.** Method according to either claim 1 or claim 2, **characterised in that**, when said aircraft (10) is in ascending flight, said horizontal speed *Vh* and said vertical speed *Vz* not being zero, operational characteristics of said aircraft (10) being defined in particular by two series of second and third performance curves according to a second formula

$$\left(\frac{W}{\sigma}\right)\Big/\left(\frac{W\prime}{\sigma}\right)_{Vy} = f_2(Vz)$$

and a third formula

$$\left(\frac{W\prime}{\sigma}\right)_{Vy} = f_3\left(\frac{M_m}{\sigma}\right)$$

, respectively, *W* being said flight power of said aircraft (10), $\sigma$ being a reduction coefficient, $M_m$ being said measured instantaneous mass of said aircraft (10), *Vz* being said vertical speed of said aircraft (10), *Vy* being the optimal climbing speed of said aircraft (10), $f_2$ and $f_3$ being a second and third function, respectively, represented by two series of performance curves of said aircraft (10), a first ratio $\left(\frac{W}{\sigma}\right)$ being obtained by any vertical speed *Vz* of said aircraft (10), said flight power *W* corresponding to said vertical speed *Vz,* a second ratio $\left(\frac{W\prime}{\sigma}\right)_{Vy}$ being obtained for a speed *Vh'* of said aircraft (10) that is horizontal only and is equal to said optimal climbing speed *Vy*, an optimal power *W'* corresponding to said horizontal speed *Vh'*,

- a third value $A_3$ is determined by virtue of a second performance curve of said aircraft (10) according to said second function $f_2$ corresponding to the flight conditions of said aircraft (10) and on the basis of said vertical speed *Vz* of said aircraft (10) such that

$$A_3 = f_2(Vz) = \left(\frac{W}{\sigma}\right)\Big/\left(\frac{W\prime}{\sigma}\right)_{Vy},$$

- said reduction coefficient $\sigma$ is calculated such that $\sigma = \left(\frac{P_0}{T_0}\right)$,

- a fourth value $A_4$ is calculated from said third value $A_3$, said flight power *W* and said reduction coefficient $\sigma$ such that

$$A_4 = \left(\frac{W}{\sigma}\right)\Big/A_3 = \left[\left(\frac{W\prime}{\sigma}\right)_{Vy}\right],$$

- a fifth value $A_5$ is determined by virtue of a third performance curve of said aircraft (10) according to said third function $f_3$ and corresponding to the flight conditions of said aircraft (10) and on the basis of said fourth value $A_4$ which is such

that $A_4 = \left[\left(\frac{W'}{\sigma}\right)_{Vy}\right] = f_3\left(\frac{M_m}{\sigma}\right)$ , such that

$A_5 = \left(\frac{M_m}{\sigma}\right)$ , and

- said measured instantaneous mass $M_m$ is calculated from said fifth value $A_5$ such that $M_m = A_5 . \sigma$.

**5.** Method according to either claim 1 or claim 2, **characterised in that**, when said aircraft (10) is in level flight, said vertical speed Vz being substantially zero, the operational characteristics of said aircraft (10) being defined in particular by two series of third and fourth performance curves according to a third formula $\left(\frac{W'}{\sigma}\right)_{Vy} = f_3\left(\frac{M_m}{\sigma}\right)$ and a fourth formula $\left(\frac{W}{\sigma}\right) \bigg/ \left(\frac{W'}{\sigma}\right)_{Vy} = f_4\left[\left(\frac{Vh}{Vy}\right)^3, \frac{M_m}{\sigma}\right]$ , W being said flight power of said aircraft (10), $\sigma$ being a reduction coefficient, $M_m$ being said measured instantaneous mass of said aircraft (10), Vh being said horizontal speed of said aircraft (10), Vy being the optimal climbing speed of said aircraft (10), $f_3$ and $f_4$ being a third and fourth function, respectively, represented by two series of performance curves of said aircraft (10), a first ratio $\left(\frac{W}{\sigma}\right)$ being obtained by any horizontal speed Vh of said aircraft, said flight power W corresponding to said horizontal speed Vh, a second ratio $\left(\frac{W'}{\sigma}\right)_{Vy}$ being obtained by a speed Vh' of said aircraft (10) that is horizontal only and equal to said optimal climbing speed Vy, an optimal power W' corresponding to said horizontal speed Vh', said measured instantaneous mass $M_m$ is determined, allowing both the third and fourth formulas to be solved, according to said flight power W and said horizontal speed Vh.

**6.** Method according to claim 5, **characterised in that**

- a sixth value $A_6$ is calculated such that

$A_6 = \left(\frac{Vh}{Vy}\right)^3$ on the basis of said horizontal speed Vh and said optimal climbing speed Vy of said aircraft (10),
- first torques formed by a third value $A_3$ and a fifth value $A_5$ are determined by virtue of a series of fourth performance curves of said aircraft (10) according to said fourth function $f_4$ and on the basis of said sixth value $A_6$ such that

$A_3 = \left(\frac{W}{\sigma}\right) \bigg/ \left(\frac{W'}{\sigma}\right)_{Vy}$ and $A_5 = \frac{M_m}{\sigma}$ ,

- said reduction coefficient $\sigma$ is calculated such that $\sigma = \left(\frac{P_0}{T_0}\right)$ ,
- a fourth value $A_4$ is calculated from each third value $A_3$, said flight power W, and said reduction coefficient $\sigma$ such that $A_4 = \left(\frac{W}{\sigma}\right) \bigg/ A_3 = \left[\left(\frac{W'}{\sigma}\right)_{Vy}\right]$ , in order to form second torques formed by a fourth value $A_4$ and a fifth value $A_5$,
- the second torque formed by a fourth value $A_4$ and a fifth value $A_5$ are determined, solving said third formula, by virtue of a third performance curve of said aircraft (10) according to said third function $f_3$ and corresponding to the flight conditions of said aircraft (10), and
- said measured instantaneous mass $M_m$ is calculated from said fifth value $A_5$ of said second torque, solving said third formula, such that $M_m = A_5.\sigma$.

**7.** Method according to any of claims 1 to 6, **characterised in that**

- a calculated instantaneous mass $M_c$ is calculated, which is determined from the variation in the amount of fuel present in said aircraft (10),
- said measured instantaneous mass $M_m$ and said calculated instantaneous mass $M_c$ are compared in order to obtain a reliable and consolidated estimated instantaneous mass M of said aircraft (10).

**8.** Method according to claim 7, **characterised in that**, in order to compare the values of said measured instantaneous mass $M_m$ and of said calculated instantaneous mass $M_c$ during an aircraft (10) flight in an arithmetical manner,

- a first difference between said measured instantaneous mass $M_m$ and said calculated instantaneous mass $M_c$ is determined,
- if said first difference is less than or equal to an error threshold, said measured instantaneous mass $M_m$ is considered to be a reliable and usable estimated instantaneous mass M, and
- if said first difference is greater than said error threshold, said measured instantaneous mass $M_m$ is considered to be a non-usable estimated instantaneous mass $M$ and a warning is emitted.

9. Method according to claim 7,
    **characterised in that** the values of said measured instantaneous mass $M_m$ and of said calculated instantaneous mass $M_c$ are compared during an aircraft (10) flight in a statistical manner.

10. Method according to claim 9,
    **characterised in that**

    - a first difference between said measured instantaneous mass $M_m$ and said calculated instantaneous mass $M_c$ is determined,
    - a first average of said first differences determined between a time $t$ and an initial time $t_0$ is calculated,
    - if said first average is less than or equal to an error threshold, said measured instantaneous mass $M_m$ is considered to be a reliable and usable estimated instantaneous mass $M$, and
    - if said first average is greater than said error threshold, said measured instantaneous mass $M_m$ is considered to be a non-usable estimated instantaneous mass $M$ and a warning is emitted.

11. Method according to claim 9,
    **characterised in that**

    - a first difference between said measured instantaneous mass $M_m$ and said calculated instantaneous mass $M_c$ is determined,
    - a first average of said first differences determined between a time $t$ and an initial time $t_0$, and an associated first difference type, are calculated,
    - said first average and said associated first difference type are analysed in order to determine whether said measured instantaneous mass $M_m$ is considered to be a reliable and usable estimated instantaneous mass $M$.

12. Method according to claim 9,
    **characterised in that** the values of said measured instantaneous mass $M_m$ and of said calculated instantaneous mass $M_c$ are compared during an aircraft (10) flight by means of at least one Kalman filter (31).

13. Method according to any of claims 7 to 12,
    **characterised in that**

    - an instantaneous volumetric flow rate $Dv_i$ of consumption of a fuel that supplies said powerplant (20) is measured,
    - the instantaneous temperature $T_i$ of said fuel is measured,
    - an instantaneous mass flow rate $Dm_i$ of said

fuel is calculated,
    - a mass $M_{CC}$ of said fuel that has been consumed since an initial time $t_0$ is determined by integrating said instantaneous mass flow rate $Dm_i$ of said fuel from said initial time $t_0$, and
    - said calculated instantaneous mass $M_c$ is calculated, which is equal to the total initial mass $M_0$ of said aircraft (10) at said initial time $t_0$ less said mass $M_{CC}$ of said consumed fuel.

14. Method according to any of claims 7 to 12,
    **characterised in that**, said aircraft (10) comprising at least one reservoir (25, 26) in which said fuel is stored,

    - a volume $V_{CR}$ of said fuel remaining in the set of said reservoirs (25, 26) is measured,
    - the instantaneous temperature $T_i$ of said fuel is measured,
    - a mass $M_{CR}$ of said fuel remaining in said set of said reservoirs (25, 26) is calculated,
    - a mass $M_{CC}$ of said fuel that has been consumed since an initial time $t_0$ is determined by subtracting said mass $M_{CRt}$ of said fuel remaining at the time $t$ from said mass $M_{CRt_0}$ of said fuel remaining in said set of said reservoirs (25, 26) at said initial time $t_0$, and
    - said calculated instantaneous mass $M_c$ is calculated, which is equal to the total initial mass $M_0$ of said aircraft (10) at said initial time $t_0$ less said mass $M_{CC}$ of said consumed fuel.

15. Method according to any of claims 7 to 12,
    **characterised in that**, said aircraft (10) comprising at least one reservoir (25, 26) in which said fuel is stored,

    - a volume $V_{CR}$ of said fuel remaining in the set of said reservoirs (25, 26) is measured,
    - the instantaneous temperature $T_i$ of said fuel is measured,

    -- a mass $M_{CR}$ of said fuel remaining in said set of said reservoirs (25, 26) is calculated,

    - said calculated instantaneous mass $M_c$ is calculated, which is equal to the initial mass $M_1$ without fuel of said aircraft (10) at said initial time $t_0$ plus said mass $M_{CR}$ of said remaining fuel.

16. Method according to claim 13,
    **characterised in that**, in order to compare the values of said measured instantaneous mass $M_m$ and of said calculated instantaneous mass $M_c$ during an aircraft (10) flight in a statistical manner by means of a Kalman filter (31),

- a measurement vector $Z_m$ is determined such

$$Z_m \begin{pmatrix} M_m \\ M_{CC} \end{pmatrix}$$

that , $M_m$ being said measured instantaneous mass and $M_{CC}$ being said mass of consumed fuel of said aircraft (10),
- a state vector $Xto$ be determined is defined

$$X \begin{pmatrix} M \\ M_0 \end{pmatrix}$$

such that , $M$ being an estimated instantaneous mass and $M_0$ being the total initial mass of said aircraft (10),
- a state equation $X = A.X + B.Dm_i$, is defined,

where $A = \begin{bmatrix} 0 & 0 \\ 0 & 0 \end{bmatrix}$ and $B = \begin{bmatrix} -1 \\ 0 \end{bmatrix}$, $Dm_i$ being said instantaneous mass flow rate of said fuel that is equal to the derivative of said mass $M_{CC}$ of consumed fuel of said aircraft (10), $X$ being the derivative of said state vector $X$,
- a measurement equation $Z_m = C.X$ is defined,

where $C = \begin{bmatrix} 1 & 0 \\ -1 & 1 \end{bmatrix}$,

- said state equation and said measurement equation are applied to a Kalman filter (31) in order to determine said state vector $X$, and therefore said estimated instantaneous mass $M$ and said total initial mass $M_0$ of said aircraft (10).

17. Method according to any of claims 1 to 16, **characterised in that** said flight power $W$ is equal to the sum of the power consumed by said main rotor (11) and the power consumed by said anti-torque rotor (13).

18. Method according to any of claims 1 to 16, **characterised in that** said flight power $W$ is equal to an engine power provided by said powerplant (20) less an auxiliary power $W_{acc}$ required to supply apparatuses of said aircraft (10).

19. Device (1) for estimating the instantaneous mass of a rotary-wing aircraft (10), said aircraft (10) comprising a powerplant (20) provided with at least one engine (21, 22) and a main power transmission gearbox (23), as well as a plurality of sensors (13-19) which provide measurements regarding the operation and environment of said aircraft (10), said main power transmission gearbox (23) rotating at least one main rotor (11) and one anti-torque rotor (13), **characterised in that** the device (1) for estimating the instantaneous mass comprises at least one calculating means (2) and at least one memory (3), a memory (3) storing series of performance curves of said aircraft (10) and calculation instructions, said calculating means (2) receiving said measurements from said sensors (13-19) and applying said calculation instructions in order to implement the method for estimating the instantaneous mass of a rotary-wing aircraft (10) according to any of claims 1 to 18.

20. Device (1) according to claim 19, **characterised in that** said device (1) for estimating the instantaneous mass comprises at least one Kalman filter (31) in order to compare the development of said measured instantaneous mass $M_m$ and said calculated instantaneous mass $M_c$ of said aircraft (10) during a flight and to determine an estimated instantaneous mass $M$.

12    12    12    11

5    6    7    9    14    14

4    2    8    13

1    21

3    8'    9'    14

15    16    14

23    20    22

10    25    26

**Fig.1**

**Fig.2**

51

52

53

54

55

56

K

Hz

1

2    4

0,0

**Fig.3**

$\frac{W}{\sigma}(\frac{NR_O}{NR})^3$

$A_1$

$P_0, T_0$

**Fig.4**

$\frac{M}{\sigma}(\frac{NR_O}{NR})^2$

$0$

$A_2$

$(\frac{W}{\sigma})/(\frac{W'}{\sigma})_{Vy}$

$P_0, T_0$

$A_3$

**Fig.5**

$0$

$V_Z$

$V_Z$

Fig.6

Fig.7

Fig.8

Fig.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2461142 A
- EP 0502811 A
- EP 2966635 A2
- US 5987397 A
- GB 2137153 A